# EUROPEAN PATENT APPLICATION

(11) **EP 4 018 830 A1**
(43) Date of publication of application: **29.06.2022**
(21) Application number: 20216797.9
(22) Date of filing: 23.12.2020
(51) Int. Cl.: A01N 43/713, A01N 43/40, A01N 53/12, A01P 3/00

(54) **PESTICIDAL MIXTURES**

(71) Applicant: BASF SE, 67056 Ludwigshafen am Rhein (DE)
(72) Inventor: MONTAG, Jurith, 67117 Limburgerhof (DE); BRAHM, Lutz, 67117 Limburgerhof (DE); GEWEHR, Markus, 67117 Limburgerhof (DE)
(74) Representative: BASF IP Association

(57) **Abstract**

Fungicidal mixtures comprising, as active components,
1) 1-[2-[[1-(4-chlorophenyl)pyrazol-3-yl]oxymethyl]-3-methyl-phenyl]-4-methyl-tetrazol-5-one as compound I and
2) one fungicidal compound II selected from compound II-1 and II-2, compound II-1 being [(1S,2S)-1-methyl-2-(o-tolyl)propyl] (2S)-2-[(4-methoxy-3-propanoyloxy-pyridine-2-carbonyl)amino]propanoate, and compound II-2 being N-methoxy-N-[[4-[5-(trifluoromethyl)-1,2,4-oxadiazol-3-yl]phenyl]methyl]cyclopropanecarboxamide.

## Description

The present invention relates to fungicidal mixtures comprising
1) metyltetraprole as compound I and
2) a fungicidal compound II selected from compound II-1 and II-2, compound II-1 being [(1S,2S)-1-methyl-2-(o-tolyl)propyl] (2S)-2-[(4-methoxy-3-propanoyloxy-pyridine-2-carbonyl)amino]propanoate, and compound II-2 being N-methoxy-N-[[4-[5-(trifluoromethyl)-1,2,4-oxadiazol-3-yl]phenyl]methyl]cyclopropanecarboxamide.

Moreover, the invention relates to a method for controlling pests, this includes animal pests and harmful fungi, using the inventive mixtures and the use of compound I and compound II for preparing such mixtures, and also compositions comprising such mixtures.

Additionally, the present invention also comprises a method for protection of plant propagation material (preferably seed) from harmful fungi or comprising contacting the plant propagation materials (preferably seeds) with an inventive mixture in pesticidally effective amounts

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. In a particular preferred embodiment, the term propagation material denotes seeds.

Additionally, the present invention also comprises a method for protection of plant propagation material (preferably seed) from harmful fungi comprising contacting the plant propagation materials (preferably seeds) with the inventive mixture in pesticidally effective amounts.

Moreover, the invention relates to a method for controlling harmful fungi using the inventive mixtures and to the use of the compounds present in the inventive mixtures for preparing such mixtures, and also to compositions comprising such mixtures.

The present invention further relates to plant-protecting active ingredient mixtures having synergistically enhanced activity of improving the health of plants and to a method of applying such inventive mixtures to the plants.

Compound I and analogues as well as its pesticidal activity and methods for producing it are known e.g. from WO 2013/162072. Compounds II as well as their pesticidal activity and methods for producing them are known from known from WO 2019/173665, WO WO2018/177894 and WO 2020/212513.

One typical problem arising in the field of pest control lies in the need to reduce the dosage rates of the active ingredient in order to reduce or avoid unfavorable environmental or toxicological effects whilst still allowing effective pest control.

In regard to the instant invention the term pests embrace harmful fungi and animal pests.

Another problem encountered concerns the need to have available pest control agents which are effective against a broad spectrum of harmful fungi and harmful animal pests.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and harmful fungi, which have developed natural or adapted resistance against the active compound in question. Therefore, there is a need for pest control agents that help prevent or overcome resistance.

Another problem underlying the present invention is the desire for compositions that improve plants, a process which is commonly and hereinafter referred to as "plant health".

The term plant health comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

It was therefore an object of the present invention to provide pesticidal mixtures which solve the problems of reducing the dosage rate and / or enhancing the spectrum of activity and / or combining knock-down activity with prolonged control and / or to resistance management and/or promoting the health of plants.

We have found that this object is in part or in whole achieved by the fungicidal mixtures comprising
1) metyltetraprole and
2) a fungicidal compound II selected from compound II-1 and II-2, compound II-1 being [(1S,2S)-1-methyl-2-(o-tolyl)propyl] (2S)-2-[(4-methoxy-3-propanoyloxy-pyridine-2-carbonyl)amino]propanoate, and compound II-2 being N-methoxy-N-[[4-[5-(trifluoromethyl)-1,2,4-oxadiazol-3-yl]phenyl]methyl]cyclopropanecarboxamide

Compound II-1 has the structure II-1

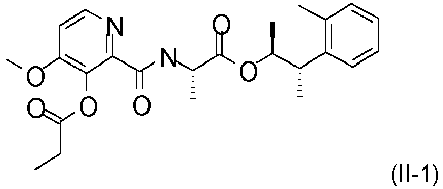

Compound II-2 has the structure II-2

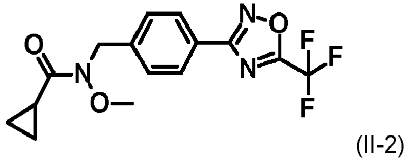

Especially, it has been found that the mixtures as defined in the outset show markedly enhanced activity against pests compared to the control rates that are possible with the individual compounds and/or is suitable for improving the health of plants when applied to plants, parts of plants, seeds, or at their locus of growth.

It has been found that the activity of the inventive mixtures comprising compound I and compound II goes far beyond the fungicidal and/or plant health improving activity of the active compounds present in the mixture alone (synergistic activity).

Moreover, we have found that simultaneous, that is joint or separate, application of the compound I and the compound II or successive application of the compound I and the compound II allows enhanced control of harmful fungi, compared to the control rates that are possible with the individual compounds (synergistic mixtures).

Moreover, we have found that simultaneous, that is joint or separate, application of the compound I and the compound II or successive application of the compound I and the compound II provides enhanced plant health effects compared to the plant health effects that are possible with the individual compounds.

The ratio by weight of compound I and compound II in binary mixtures is from 10000:1 to 1:10000, from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1.

In one embodiment the inventive mixture comprises compound I and compound II-1.
In one embodiment the inventive mixture comprises compound I and compound II-2.
In one embodiment the inventive mixture comprises compound I and a mixture of compound II-1 and compound II-2 as compound II.

Mixing compositions comprising compound I (component 1) and compound II (component 2) with other fungicides as compound III (component 3) results in many cases in an expansion of the fungicidal spectrum of activity or in a prevention of fungicide resistance development. Furthermore, in many cases, synergistic effects are obtained (synergistic mixtures).

The following list of compounds III useful as component 3, in conjunction with which the compounds I and compound II can be used, is intended to illustrate the possible combinations but does not limit them:
A) Respiration inhibitors
   - Inhibitors of complex III at Qₒ site: azoxystrobin (A.1.1), coumethoxystrobin (A.1.2), coumoxystrobin (A.1.3), dimoxystrobin (A.1.4), enestroburin (A.1.5), fenaminstrobin (A.1.6), fenoxystrobin/flufenoxystrobin (A.1.7), fluoxastrobin (A.1.8), kresoxim-methyl (A.1.9), mandestrobin (A.1.10), metominostrobin (A.1.11), orysastrobin (A.1.12), picoxystrobin (A.1.13), pyraclostrobin (A.1.14), pyrametostrobin (A.1.15), pyraoxystrobin (A.1.16), trifloxystrobin (A.1.17), 2-(2-(3-(2,6-dichlorophenyl)-1-methyl-allylideneaminooxymethyl)-phenyl)-2-methoxyimino-*N*-methyl-acetamide (A.1.18), pyribencarb (A.1.19), triclopyricarb/chloro-dincarb (A.1.20), famoxadone (A.1.21), fenamidone (A.1.21), methyl-*N*-[2-[(1,4-dimethyl-5-phenyl-pyrazol-3-yl)oxylmethyl]phenyl]-*N*-methoxy-carbamate (A.1.22), (Z,2*E*)-5-[1-(2,4-dichlorophenyl)pyrazol-3-yl]-oxy-2-methoxyimino-*N*,3-dimethyl-pent-3-enamide (A.1.34), (Z,2*E*)-5-[1-(4-chlorophenyl)pyrazol-3-yl]oxy-2-methoxyimino-*N*,3-dimethyl-pent-3-enamide (A.1.35), pyriminostrobin (A.1.36), bifujunzhi (A.1.37), 2-(ortho-((2,5-dimethylphenyl-oxy-methylen)phenyl)-3-methoxy-acrylic acid methylester (A. 1.38);
   - inhibitors of complex III at Qᵢ site: cyazofamid (A.2.1), amisulbrom (A.2.2), [(6S,7R,8*R*)-8-benzyl-3-[(3-hydroxy-4-methoxy-pyridine-2-carbonyl)amino]-6-methyl-4,9-dioxo-1,5-dioxonan-7-yl] 2-methylpropanoate (A.2.3), fenpicoxamid (A.2.4), florylpicoxamid (A.2.5), [(1S,2*S*)-2-(4-fluoro-2-methyl-phenyl)-1,3-dimethyl-butyl] (2*S*)-2-[(3-hydroxy-4-methoxy-pyridine-2-carbonyl)amino]propanoate, [(1S,2*S*)-2-(2,4-dimethylphenyl)-1,3-dimethyl-butyl] (2*S*)-2-[(3-hydroxy-4-methoxy-pyridine-2-carbonyl)amino]propanoate, [(1S,2*S*)-2-(2,4-difluorophenyl)-1,3-dimethyl-butyl] (2*S*)-2-[(3-hydroxy-4-methoxy-pyridine-2-carbonyl)amino]propanoate, [(1*S*,2*S*)-2-(2-fluoro-4-methyl-phenyl)-1,3-dimethyl-butyl] (2*S*)-2-[(3-hydroxy-4-methoxy-pyridine-2-carbonyl)amino]propanoate, [(1S,2*S*)-2-(4-fluoro-2-methyl-phenyl)-1,3-dimethyl-butyl] (2*S*)-2-[(3-acetoxy-4-methoxy-pyridine-2-carbonyl)-amino]propanoate, [(1*S*,2*S*)-2-(2,4-dimethylphenyl)-1,3-dimethyl-butyl] (2*S*)-2-[(3-acetoxy-4-methoxy-pyridine-2-carbonyl)amino]propanoate, [(1*S*,2*S*)-2-(2,4-difluorophenyl)-1,3-dimethyl-butyl](2*S*)-2-[(3-acetoxy-4-methoxy-pyridine-2-carbonyl)amino]propanoate, [(1*S*,2*S*)-2-(2-fluoro-4-methyl-phenyl)-1,3-dimethyl-butyl] (2*S*)-2-[(3-acetoxy-4-methoxy-pyridine-2-carbonyl)amino]propanoate, [2-[[(1*S*)-2-[(1*S*,2*S*)-2-(4-fluoro-2-methyl-phenyl)-1,3-dimethyl-butoxy]-1-methyl-2-oxo-ethyl]carbamoyl]-4-methoxy-3-pyridyl]oxymethyl 2-methylpropanoate, [2-[[(1*S*)-2-[(1*S*,2*S*)-2-(2,4-dimethylphenyl)-1,3-dimethyl-butoxy]-1-methyl-2-oxoethyl]carbamoyl]-4-methoxy-3-pyridyl]oxymethyl 2-methylpropanoate, [2-[[(1*S*)-2-[(1*S*,2*S*)-2-(2,4-difluorophenyl)-1,3-dimethyl-butoxy]-1-methyl-2-oxo-ethyl]carbamoyl]-4-methoxy-3-pyridyl]oxymethyl 2-methylpropanoate, [2-[[(1*S*)-2-[(1*S*,2*S*)-2-(2-fluoro-4-methyl-phenyl)-1,3-dimethyl-butoxy]-1-methyl-2-oxo-ethyl]carbamoyl]-4-methoxy-3-pyridyl]oxymethyl 2-methylpropanoate, [(1*S*,2*S*)-1-methyl-2-(o-tolyl)propyl] (2*S*)-2-[(3-acetoxy-4-methoxy-pyridine-2-carbonyl)amino]propanoate, [(1*S*,2*S*)-1-methyl-2-(o-tolyl)propyl] (2*S*)-2-[(4-methoxy-3-propanoyloxy-pyridine-2-carbonyl)amino]propanoate, [(1*S*,2*S*)-1-methyl-2-(o-tolyl)propyl](2*S*)-2-[(3-hydroxy-4-methoxy-pyridine-2-carbonyl)amino]propanoate, [4-methoxy-2-[[(1*S*)-1-methyl-2-[(1*S*,2*S*)-1-methyl-2-(o-tolyl)propoxy]-2-oxo-ethyl]carbamoyl]-3-pyridyl] 2-methylpropanoate, [(1*S*,2*S*)-2-(2,4-dimethylphenyl)-1-methyl-propyl] (2*S*)-2-[(3-acetoxy-4-methoxy-pyridine-2-carbonyl)amino]propanoate, [2-[[(1*S*)-2-[(1*S*,2*S*)-2-(2,4-dimethylphenyl)-1-methyl-propoxy]-1-methyl-2-oxo-ethyl]carbamoyl]-4-methoxy-3-pyridyl] 2-methylpropanoate, [(1*S*,2*S*)-2-(2,4-dimethylphenyl)-1-methylpropyl] (2*S*)-2-[(3-hydroxy-4-methoxy-pyridine-2-carbonyl)amino]propanoate, [(1*S*,2*S*)-2-(2,6-dimethylphenyl)-1-methyl-propyl](2*S*)-2-[(3-acetoxy-4-methoxy-pyridine-2-carbonyl)amino]propanoate, [2-[[(1*S*)-2-[(1*S*,2*S*)-2-(2,6-dimethylphenyl)-1-methyl-propoxy]-1-methyl-2-oxo-ethyl]carbamoyl]-4-methoxy-3-pyridyl] 2-methylpropanoate, [(1*S*,2*S*)-2-(2,6-dimethylphenyl)-1-methyl-propyl] (2*S*)-2-[(3-hydroxy-4-methoxy-pyridine-2-carbonyl)-amino]propanoate, [(1*S*,2*S*)-2-[4-fluoro-2-(trifluoromethyl)phenyl]-1-methyl-propyl] (2*S*)-2-[(3-acetoxy-4-methoxy-pyridine-2-carbonyl)amino]propanoate, [2-[[(1*S*)-2-[(1*S*,2*S*)-2-[4-fluoro-2-(trifluoromethyl)phenyl]-1-methyl-propoxy]-1-methyl-2-oxoethyl]carbamoyl]-4-methoxy-3-pyridyl] 2-methylpropanoate, [(1*S*,2*S*)-2-[4-fluoro-2-(trifluoromethyl)phenyl]-1-methyl-propyl] (2*S*)-2-[(3-hydroxy-4-methoxy-pyridine-2-carbonyl)amino]-propanoate, [(1*S*,2*S*)-2-(4-fluoro-2-methyl-phenyl)-1-methyl-propyl] (2*S*)-2-[(3-acetoxy-4-methoxy-pyridine-2-carbonyl)amino]propanoate, [2-[[(1*S*)-2-[(1*S*,2*S*)-2-(4-fluoro-2-methylphenyl)-1-methyl-propoxy]-1-methyl-2-oxo-ethyl]carbamoyl]-4-methoxy-3-pyridyl] 2-methylpropanoate, [(1*S*,2*S*)-2-(4-fluoro-2-methyl-phenyl)-1-methyl-propyl] (2*S*)-2-[(3-hydroxy-4-methoxy-pyridine-2-carbonyl)amino]propanoate, [(1*S*,2*S*)-1-methyl-2-[2-(trifluoromethyl)-phenyl]propyl] (2*S*)-2-[(3-acetoxy-4-methoxy-pyridine-2-carbonyl)amino]propanoate, [4-methoxy-2-[[(1*S*)-1-methyl-2-[(1*S*,2*S*)-1-methyl-2-[2-(trifluoromethyl)phenyl]propoxy]-2-oxoethyl]carbamoyl]-3-pyridyl] 2-methylpropanoate, [(1*S*,2*S*)-1-methyl-2-[2-(trifluoromethyl)-phenyl]propyl] (2*S*)-2-[(3-hydroxy-4-methoxy-pyridine-2-carbonyl)amino]propanoate, [(1*S*,2*S*)-2-(4-fluoro-2,6-dimethyl-phenyl)-1-methyl-propyl] (2*S*)-2-[(3-acetoxy-4-methoxy-pyridine-2-carbonyl)amino]propanoate, [2-[[(1*S*)-2-[(1*S*,2S)-2-(4-fluoro-2,6-dimethyl-phenyl)-1-methyl-propoxy]-1-methyl-2-oxo-ethyl]carbamoyl]-4-methoxy-3-pyridyl] 2-methylpropanoate, [(1*S*,2*S*)-2-(4-fluoro-2,6-dimethyl-phenyl)-1-methyl-propyl](2*S*)-2-[(3-hydroxy-4-methoxy-pyridine-2-carbonyl)amino]propanoate;
   - inhibitors of complex II: benodanil (A.3.1), benzovindiflupyr (A.3.2), bixafen (A.3.3), boscalid (A.3.4), carboxin (A.3.5), fenfuram (A.3.6), fluopyram (A.3.7), flutolanil (A.3.8), fluxapyroxad (A.3.9), furametpyr (A.3.10), isofetamid (A.3.11), isopyrazam (A.3.12), mepronil (A.3.13), oxycarboxin (A.3.14), penflufen (A.3.15), penthiopyrad (A.3.16), pydiflumetofen (A.3.17), pyraziflumid (A.3.18), sedaxane (A.3.19), tecloftalam (A.3.20), thifluzamide (A.3.21), inpyrfluxam (A.3.22), pyrapropoyne (A.3.23), fluindapyr (A.3.28), N-[2-[2-chloro-4-(trifluoromethyl)phenoxy]phenyl]-3-(difluoromethyl)-5-fluoro-1-methyl-pyrazole-4-carboxamide (A.3.29), methyl (*E*)-2-[2-[(5-cyano-2-methyl-phenoxy)methyl]phenyl]-3-methoxy-prop-2-enoate (A.3.30), isoflucypram (A.3.31), 2-(difluoromethyl)-*N*-(1,1,3-trimethyl-indan-4-yl)-pyridine-3-carboxamide (A.3.32), 2-(difluoromethyl)-*N*-[(3*R*)-1,1,3-trimethylindan-4-yl]-pyridine-3-carboxamide (A.3.33), 2-(difluoromethyl)-*N*-(3-ethyl-1,1-dimethyl-indan-4-yl)-pyridine-3-carboxamide (A.3.34), 2-(difluoromethyl)-*N*-[(3*R*)-3-ethyl-1,1-dimethyl-indan-4-yl]-pyridine-3-carboxamide (A.3.35), 2-(difluoromethyl)-*N*-(1,1-dimethyl-3-propyl-indan-4-yl)pyridine-3-carboxamide (A.3.36), 2-(difluoromethyl)-*N*-[(3*R*)-1,1-dimethyl-3-propyl-indan-4-yl]-pyridine-3-carboxamide (A.3.37), 2-(difluoromethyl)-*N*-(3-isobutyl-1,1-dimethyl-indan-4-yl)-pyridine-3-carboxamide (A.3.38), 2-(difluoromethyl)-*N*-[(3*R*)-3-isobutyl-1,1-dimethyl-indan-4-yl]pyridine-3-carboxamide (A.3.39);
   - other respiration inhibitors: diflumetorim (A.4.1); nitrophenyl derivates: binapacryl (A.4.2), dinobuton (A.4.3), dinocap (A.4.4), fluazinam (A.4.5), meptyldinocap (A.4.6), ferimzone (A.4.7); organometal compounds: fentin salts, e. g. fentin-acetate (A.4.8), fentin chloride (A.4.9) or fentin hydroxide (A.4.10); ametoctradin (A.4.11); silthiofam (A.4.12);
B) Sterol biosynthesis inhibitors (SBI fungicides)
   - C14 demethylase inhibitors: triazoles: azaconazole (B.1.1), bitertanol (B.1.2), bromuconazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluquinconazole (B.1.10), flusilazole (B.1.11), flutriafol (B.1.12), hexaconazole (B.1.13), imibenconazole (B.1.14), ipconazole (B.1.15), metconazole (B.1.17), myclobutanil (B.1.18), oxpoconazole (B.1.19), paclobutrazole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), 2-(2,4-difluorophenyl)-1,1-difluoro-3-(tetrazol-1-yl)-1-[5-[4-(2,2,2-trifluoroethoxy)phenyl]-2-pyridyl]propan-2-ol (B.1.31), 2-(2,4-difluorophenyl)-1,1-difluoro-3-(tetrazol-1-yl)-1-[5-[4-(trifluoromethoxy)phenyl]-2-pyridyl]propan-2-ol (B.1.32), 4-[[6-[2-(2,4-difluorophenyl)-1,1-difluoro-2-hydroxy-3-(5-sulfanyl-1,2,4-triazol-1-yl)propyl]-3-pyridyl]oxy]benzonitrile (B.1.33), ipfentrifluconazole (B.1.37), mefentrifluconazole (B.1.38), (2*R*)-2-[4-(4-chlorophenoxy)-2-(trifluoromethyl)phenyl]-1-(1,2,4-triazol-1-yl)propan-2-ol, (2*S*)-2-[4-(4-chlorophenoxy)-2-(trifluoromethyl)phenyl]-1-(1,2,4-triazol-1-yl)propan-2-ol, 2-(chloromethyl)-2-methyl-5-(*p*-tolylmethyl)-1-(1,2,4-triazol-1-ylmethyl)cyclopentanol (B.1.43); imidazoles: imazalil (B.1.44), pefurazoate (B.1.45), prochloraz (B.1.46), triflumizol (B.1.47); pyrimidines, pyridines, piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52), 4-[[6-[2-(2,4-difluorophenyl)-1,1-difluoro-2-hydroxy-3-(1,2,4-triazol-1-yl)propyl]-3-pyridyl]oxy]benzonitrile (B.1.53), 2-[6-(4-bromo-phenoxy)-2-(trifluoromethyl)-3-pyridyl]-1-(1,2,4-triazol-1-yl)propan-2-ol (B.1.54), 2-[6-(4-chlorophenoxy)-2-(trifluoromethyl)-3-pyridyl]-1-(1,2,4-triazol-1-yl)propan-2-ol (B.1.55);
   - Delta14-reductase inhibitors: aldimorph (B.2.1), dodemorph (B.2.2), dodemorph-acetate (B.2.3), fenpropimorph (B.2.4), tridemorph (B.2.5), fenpropidin (B.2.6), piperalin (B.2.7), spiroxamine (B.2.8);
   - Inhibitors of 3-keto reductase: fenhexamid (B.3.1);
   - Other Sterol biosynthesis inhibitors: chlorphenomizole (B.4.1);
C) Nucleic acid synthesis inhibitors
   - phenylamides or acyl amino acid fungicides: benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
   - other nucleic acid synthesis inhibitors: hymexazole (C.2.1), octhilinone (C.2.2), oxolinic acid (C.2.3), bupirimate (C.2.4), 5-fluorocytosine (C.2.5), 5-fluoro-2-(p-tolylmethoxy)pyrimidin-4-amine (C.2.6), 5-fluoro-2-(4-fluorophenylmethoxy)pyrimidin-4-amine (C.2.7), 5-fluoro-2-(4-chlorophenylmethoxy)pyrimidin-4 amine (C.2.8);
D) Inhibitors of cell division and cytoskeleton
   - tubulin inhibitors: benomyl (D.1.1), carbendazim (D.1.2), fuberidazole (D1.3), thiabendazole (D.1.4), thiophanate-methyl (D.1.5), pyridachlometyl (D.1.6), *N*-ethyl-2-[(3-ethynyl-8-methyl-6-quinolyl)oxy]butanamide (D.1.8), *N*-ethyl-2-[(3-ethynyl-8-methyl-6-quinolyl)oxy]-2-methylsulfanyl-acetamide (D.1.9), 2-[(3-ethynyl-8-methyl-6-quinolyl)oxy]-*N*-(2-fluoroethyl)butanamide (D.1.10), 2-[(3-ethynyl-8-methyl-6-quinolyl)oxy]-*N*-(2-fluoroethyl)-2-methoxy-acetamide (D.1.11), 2-[(3-ethynyl-8-methyl-6-quinolyl)oxy]-*N*-propyl-butanamide (D.1.12), 2-[(3-ethynyl-8-methyl-6-quinolyl)oxy]-2-methoxy-*N*-propyl-acetamide (D.1.13), 2-[(3-ethynyl-8-methyl-6-quinolyl)oxy]-2-methylsulfanyl-*N*-propyl-acetamide (D.1.14), 2-[(3-ethynyl-8-methyl-6-quinolyl)oxy]-*N*-(2-fluoroethyl)-2-methylsulfanyl-acetamide (D.1.15), 4-(2-bromo-4-fluorophenyl)-*N*-(2-chloro-6-fluoro-phenyl)-2,5-dimethyl-pyrazol-3-amine (D.1.16);
   - other cell division inhibitors: diethofencarb (D.2.1), ethaboxam (D.2.2), pencycuron (D.2.3), fluopicolide (D.2.4), zoxamide (D.2.5), metrafenone (D.2.6), pyriofenone (D.2.7), phenamacril (D.2.8);
E) Inhibitors of amino acid and protein synthesis
   - methionine synthesis inhibitors: cyprodinil (E.1.1), mepanipyrim (E.1.2), pyrimethanil (E.1.3);
   - protein synthesis inhibitors: blasticidin-S (E.2.1), kasugamycin (E.2.2), kasugamycin hydrochloride-hydrate (E.2.3), mildiomycin (E.2.4), streptomycin (E.2.5), oxytetracyclin (E.2.6);
F) Signal transduction inhibitors
   - MAP / histidine kinase inhibitors: fluoroimid (F.1.1), iprodione (F.1.2), procymidone (F.1.3), vinclozolin (F.1.4), fludioxonil (F.1.5);
   - G protein inhibitors: quinoxyfen (F.2.1);
G) Lipid and membrane synthesis inhibitors
   - Phospholipid biosynthesis inhibitors: edifenphos (G.1.1), iprobenfos (G.1.2), pyrazophos (G.1.3), isoprothiolane (G.1.4);
   - lipid peroxidation: dicloran (G.2.1), quintozene (G.2.2), tecnazene (G.2.3), tolclofos-methyl (G.2.4), biphenyl (G.2.5), chloroneb (G.2.6), etridiazole (G.2.7), zinc thiazole (G.2.8);
   - phospholipid biosynthesis and cell wall deposition: dimethomorph (G.3.1), flumorph (G.3.2), mandipropamid (G.3.3), pyrimorph (G.3.4), benthiavalicarb (G.3.5), iprovalicarb (G.3.6), valifenalate (G.3.7);
   - compounds affecting cell membrane permeability and fatty acides: propamocarb (G.4.1);
   - inhibitors of oxysterol binding protein: oxathiapiprolin (G.5.1), fluoxapiprolin (G.5.3), 4-[1-[2-[3-(difluoromethyl)-5-methyl-pyrazol-1-yl]acetyl]-4-piperidyl]-*N*-tetralin-1-yl-pyridine-2-carboxamide (G.5.4), 4-[1-[2-[3,5-bis(difluoromethyl)pyrazol-1-yl]acetyl]-4-piperidyl]-*N*-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-*N*-tetralin-1-yl-pyridine-2-carboxamide (G.5.6), 4-[1-[2-[5-cyclopropyl-3-(difluoromethyl)pyrazol-1-yl]acetyl]-4-piperidyl]-*N*-tetralin-1-yl-pyridine-2-carboxamide (G.5.7), 4-[1-[2-[5-methyl-3-(trifluoromethyl)pyrazol-1-yl]acetyl]-4-piperidyl]-*N*-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-*N*-tetralin-1-yl-pyridine-2-carboxamide (G.5.9), 4-[1-[2-[3,5-bis(trifluoromethyl)pyrazol-1-yl]acetyl]-4-piperidyl]-*N*-tetralin-1-yl-pyridine-2-carboxamide (G.5.10), (4-[1-[2-[5-cyclopropyl-3-(trifluoromethyl)pyrazol-1-yl]acetyl]-4-piperidyl]-*N*-tetralin-1-yl-pyridine-2-carboxamide (G.5.11);
H) Inhibitors with Multi Site Action
   - inorganic active substances: Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
   - thio- and dithiocarbamates: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9);
   - organochlorine compounds: anilazine (H.3.1), chlorothalonil (H.3.2), captafol (H.3.3), captan (H.3.4), folpet (H.3.5), dichlofluanid (H.3.6), dichlorophen (H.3.7), hexachlorobenzene (H.3.8), pentachlorphenole (H.3.9) and its salts, phthalide (H.3.10), tolylfluanid (H.3.11);
   - guanidines and others: guanidine (H.4.1), dodine (H.4.2), dodine free base (H.4.3), guazatine (H.4.4), guazatine-acetate (H.4.5), iminoctadine (H.4.6), iminoctadine-triacetate (H.4.7), iminoctadine-tris(albesilate) (H.4.8), dithianon (H.4.9), 2,6-dimethyl-1*H*,5*H*-[1,4]dithiino[2,3-c:5,6-c']dipyrrole-1,3,5,7(2*H*,6*H*)-tetraone (H.4.10);
I) Cell wall synthesis inhibitors
   - inhibitors of glucan synthesis: validamycin (I.1.1), polyoxin B (I.1.2);
   - melanin synthesis inhibitors: pyroquilon (I.2.1), tricyclazole (I.2.2), carpropamid (I.2.3), dicyclomet (I.2.4), fenoxanil (I.2.5);
J) Plant defense inducers
   - acibenzolar-S-methyl (J.1.1), probenazole (J.1.2), isotianil (J.1.3), tiadinil (J.1.4), prohexadione-calcium (J.1.5); phosphonates: fosetyl (J.1.6), fosetyl-aluminum (J.1.7), phosphorous acid and its salts (J.1.8), calcium phosphonate (J.1.11), potassium phosphonate (J.1.12), potassium or sodium bicarbonate (J.1.9), 4-cyclopropyl-*N*-(2,4-dimethoxyphenyl)thiadiazole-5-carboxamide (J.1.10);
K) Unknown mode of action
   - bronopol (K.1.1), chinomethionat (K.1.2), cyflufenamid (K.1.3), cymoxanil (K.1.4), dazomet (K.1.5), debacarb (K.1.6), diclocymet (K.1.7), diclomezine (K.1.8), difenzoquat (K.1.9), difenzoquat-methylsulfate (K.1.10), diphenylamin (K.1.11), fenitropan (K.1.12), fenpyrazamine (K.1.13), flumetover (K.1.14), flusulfamide (K.1.15), flutianil (K.1.16), harpin (K.1.17), methasulfocarb (K.1.18), nitrapyrin (K.1.19), nitrothal-isopropyl (K.1.20), tolprocarb (K.1.21), oxincopper (K.1.22), proquinazid (K.1.23), tebufloquin (K.1.24), tecloftalam (K.1.25), triazoxide (K.1.26), *N*'-(4-(4-chloro-3-trifluoromethyl-phenoxy)-2,5-dimethyl-phenyl)-*N*-ethyl-*N*-methyl formamidine (K.1.27), *N*'-(4-(4-fluoro-3-trifluoromethyl-phenoxy)-2,5-dimethyl-phenyl)-*N*-ethyl-*N*-methyl formamidine (K.1.28), *N*'-[4-[[3-[(4-chlorophenyl)methyl]-1,2,4-thiadiazol-5-yl]-oxy]-2,5-dimethyl-phenyl]-*N*-ethyl-*N*-methyl-formamidine (K.1.29), *N*'-(5-bromo-6-indan-2-yloxy-2-methyl-3-pyridyl)-*N*-ethyl-*N*-methyl-formamidine (K.1.30), *N*'-[5-bromo-6-[1-(3,5-difluorophenyl)ethoxy]-2-methyl-3-pyridyl]-*N*-ethyl-*N*-methyl-formamidine (K.1.31), *N*'-[5-bromo-6-(4-isopropylcyclohexoxy)-2-methyl-3-pyridyl]-*N*-ethyl-*N*-methyl-formamidine (K. 1.32), *N*'-[5-bromo-2-methyl-6-(1-phenylethoxy)-3-pyridyl]-*N*-ethyl-*N*-methyl-formamidine (K.1.33), *N*'-(2-methyl-5-trifluoromethyl-4-(3-trimethylsilanyl-propoxy)-phenyl)-*N*-ethyl-*N*-methyl formamidine (K.1.34), *N*'-(5-difluoromethyl-2-methyl-4-(3-trimethylsilanyl-propoxy)-phenyl)-*N*-ethyl-*N*-methyl formamidine (K.1.35), 2-(4-chloro-phenyl)-*N*-[4-(3,4-dimethoxy-phenyl)-isoxazol-5-yl]-2-prop-2-ynyloxy-acetamide (K.1.36), 3-[5-(4-chloro-phenyl)-2,3-dimethyl-isoxazolidin-3-yl]-pyridine (pyrisoxazole) (K.1.37), 3-[5-(4-methylphenyl)-2,3-dimethyl-isoxazolidin-3-yl]-pyridine (K.1.38), 5-chloro-1-(4,6-dimethoxy-pyrimidin-2-yl)-2-methyl-1*H*-benzoimidazole (K.1.39), ethyl (Z)-3-amino-2-cyano-3-phenyl-prop-2-enoate (K.1.40), picarbutrazox (K.1.41), pentyl *N*-[6-[[(*Z*)-[(1-methyltetrazol-5-yl)-phenyl-methylene]amino]oxymethyl]-2-pyridyl]carbamate (K.1.42), but-3-ynyl *N*-[6-[[(*Z*)-[(1-methyltetrazol-5-yl)-phenyl-methylene]amino]oxymethyl]-2-pyridyl]carbamate (K.1.43), ipflufenoquin (K.1.44), quinofumelin (K.1.47), benziothiazolinone (K.1.48), bromothalonil (K.1.49), 2-(6-benzyl-2-pyridyl)quinazoline (K.1.50), 2-[6-(3-fluoro-4-methoxy-phenyl)-5-methyl-2-pyridyl]quinazoline (K.1.51), dichlobentiazox (K.1.52), *N*'-(2,5-dimethyl-4-phenoxy-phenyl)-*N*-ethyl-*N*-methyl-formamidine (K.1.53), aminopyrifen (K.1.54), fluopimomide (K.1.55), *N*'-[5-bromo-2-methyl-6-(1-methyl-2-propoxyethoxy)-3-pyridyl]-N-ethyl-N-methyl-formamidine (K.1.56), N'-[4-(4,5-dichlorothiazol-2-yl)oxy-2,5-dimethyl-phenyl]-N-ethyl-N-methyl-formamidine (K.1.57); 2,4-difluorophenyl, N-methyl-4-[5-(trifluoromethyl)-1,2,4-oxadiazol-3-yl]benzenecarbothioamide (K.1.59);
L) Biopesticides
   L1) Microbial pesticides with fungicidal, bactericidal, viricidal and/or plant defense activator activity: *Ampelomyces quisqualis, Aspergillus flavus, Aureobasidium pullulans, Bacillus altitudinis, B. amyloliquefaciens, B. amyloliquefaciens* ssp. *plantarum* (also referred to as *B. velezensis), B. megaterium, B. mojavensis, B. mycoides, B. pumilus, B. simplex, B. solisalsi, B. subtilis, B. subtilis* var. *amyloliquefaciens, B. velezensis, Candida oleophila, C. saitoana, Clavibacter michiganensis* (bacteriophages), *Coniothyrium minitans, Cryphonectria parasitica, Cryptococcus albidus, Dilophosphora alopecuri, Fusarium oxysporum, Clonostachys rosea* f. *catenulate* (also named *Gliocladium catenulatum), Gliocladium roseum, Lysobacter antibioticus, L. enzymogenes, Metschnikowia fructicola, Microdochium dimerum, Microsphaeropsis ochracea, Muscodor albus, Paenibacillus alvei, Paenibacillus epiphyticus, P. polymyxa, Pantoea vagans, Penicillium bilaiae, Phlebiopsis gigantea, Pseudomonas* sp., *Pseudomonas chloraphis, Pseudozyma flocculosa, Pichia anomala, Pythium oligandrum, Sphaerodes mycoparasitica, Streptomyces griseoviridis, S. lydicus, S. violaceusniger, Talaromyces flavus, Trichoderma asperelloides, T. asperellum, T. atroviride, T. fertile, T. gamsii, T. harmatum, T. harzianum, T. polysporum, T. stromaticum, T. virens, T. viride, Typhula phacorrhiza, Ulocladium oudemansii, Verticillium dahlia,* zucchini yellow mosaic virus (avirulent strain);
   L2) Biochemical pesticides with fungicidal, bactericidal, viricidal and/or plant defense activator activity: harpin protein, *Reynoutria sachalinensis* extract;
   L3) Microbial pesticides with insecticidal, acaricidal, molluscidal and/or nematicidal activity: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *tenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Helicoverpa zea* nucleopolyhedrovirus (HzNPV), *Helicoverpa zea* single capsid nucleopolyhedrovirus (HzSNPV), *Heterorhabditis bacteriophora, Isaria fumoso*rosea, *Lecanicillium longisporum, L. muscarium, Metarhizium anisopliae, M. anisopliae* var. *anisopliae, M. anisopliae* var. *acridum, Nomuraea rileyi, Paecilomyces fumosoroseus, P. lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus;*
   L4) Biochemical pesticides with insecticidal, acaricidal, molluscidal, pheromone and/or nematicidal activity: L-carvone, citral, (*E*,*Z*)-7,9-dodecadien-1-yl acetate, ethyl formate, (*E*,*Z*)-2,4-ethyl decadienoate (pear ester), (*Z*,*Z*,*E*)-7,11,13-hexadecatrienal, heptyl butyrate, isopropyl myristate, lavanulyl senecioate, cis-jasmone, 2-methyl 1-butanol, methyl eugenol, methyl jasmonate, (*E*,*Z*)-2,13-octadecadien-1-ol, (*E*,*Z*)-2,13-octadecadien-1-ol acetate, (*E*,*Z*)-3,13-octadecadien-1-ol, (*R*)-1-octen-3-ol, pentatermanone, (*E*,*Z*,*Z*)-3,8,11-tetradecatrienyl acetate, (*Z*,*E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract;
   L5) Microbial pesticides with plant stress reducing, plant growth regulator, plant growth promoting and/or yield enhancing activity: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. I.* bv. *trifolii, R. I.* bv. *viciae, R. tropici, Sinorhizobium meliloti;*
O) Insecticides from classes O.1 to O.29
   O.1 Acetylcholine esterase (AChE) inhibitors: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate; acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
   O.2 GABA-gated chloride channel antagonists: endosulfan, chlordane; ethiprole, fipronil, flufiprole, pyrafluprole, pyriprole;
   O.3 Sodium channel modulators: acrinathrin, allethrin, d-cis-trans allethrin, d-trans allethrin, bifenthrin, kappa-bifenthrin, bioallethrin, bioallethrin S-cylclopentenyl, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, heptafluthrin, imiprothrin, meperfluthrin, metofluthrin, momfluorothrin, epsilon-momfluorothrin, permethrin, phenothrin, prallethrin, profluthrin, pyrethrin (pyrethrum), resmethrin, silafluofen, tefluthrin, kappa-tefluthrin, tetramethylfluthrin, tetramethrin, tralomethrin, transfluthrin; DDT, methoxychlor;
   O.4 Nicotinic acetylcholine receptor (nAChR) agonists: acetamiprid, clothianidin, cycloxaprid, dinotefuran, imidacloprid, nitenpyram, thiacloprid, thiamethoxam; 4,5-dihydro-*N*-nitro-1-(2-oxiranylmethyl)-1*H*-imidazol-2-amine, (2*E*)-1-[(6-chloropyridin-3-yl)methyl]-*N*'-nitro-2-pentylidenehydrazinecarboximidamide; 1-[(6-chloropyridin-3-yl)methyl]-7-methyl-8-nitro-5-propoxy-1,2,3,5,6,7-hexahydroimidazo[1,2-a]pyridine; nicotine; sulfoxaflor, flupyradifurone, triflumezopyrim, (3*R*)-3-(2-chlorothiazol-5-yl)-8-methyl-5-oxo-6-phenyl-2,3-dihydrothiazolo-[3,2-a]pyrimidin-8-ium-7-olate, (3*S*)-3-(6-chloro-3-pyridyl)-8-methyl-5-oxo-6-phenyl-2,3-dihydrothiazolo[3,2-a]pyrimidin-8-ium-7-olate, (3*S*)-8-methyl-5-oxo-6-phenyl-3-pyrimidin-5-yl-2,3-dihydrothiazolo[3,2-a]pyrimidin-8-ium-7-olate, (3*R*)-3-(2-chlorothiazol-5-yl)-8-methyl-5-oxo-6-[3-(trifluoromethyl)phenyl]-2,3-dihydrothiazolo[3,2-a]pyrimidin-8-ium-7-olate; (3*R*)-3-(2-chlorothiazol-5-yl)-6-(3,5-dichlorophenyl)-8-methyl-5-oxo-2,3-dihydrothiazolo-[3,2-a]pyrimidin-8-ium-7-olate, (3*R*)-3-(2-chlorothiazol-5-yl)-8-ethyl-5-oxo-6-phenyl-2,3-dihydrothiazolo[3,2-a]pyrimidin-8-ium-7-olate;
   O.5 Nicotinic acetylcholine receptor allosteric activators: spinosad, spinetoram;
   O.6 Chloride channel activators: abamectin, emamectin benzoate, ivermectin, lepimectin, milbemectin;
   O.7 Juvenile hormone mimics: hydroprene, kinoprene, methoprene; fenoxycarb, pyriproxyfen;
   O.8 miscellaneous non-specific (multi-site) inhibitors: methyl bromide and other alkyl halides; chloropicrin, sulfuryl fluoride, borax, tartar emetic;
   O.9 Chordotonal organ TRPV channel modulators: pymetrozine, pyrifluquinazon;
   O.10 Mite growth inhibitors: clofentezine, hexythiazox, diflovidazin; etoxazole;
   O.11 Microbial disruptors of insect midgut membranes: *Bacillus thuringiensis, Bacillus sphaericus* and the insecticdal proteins they produce: *Bacillus thuringiensis* subsp. *israelensis, Bacillus sphaericus, Bacillus thuringiensis* subsp. *aizawai, Bacillus thuringiensis* subsp. *kurstaki, Bacillus thuringiensis* subsp. *tenebrionis,* the Bt crop proteins: Cry1Ab, Cry1Ac, Cry1Fa, Cry2Ab, mCry3A, Cry3Ab, Cry3Bb, Cry34/35Ab1;
   0.12 Inhibitors of mitochondrial ATP synthase: diafenthiuron; azocyclotin, cyhexatin, fenbutatin oxide, propargite, tetradifon;
   0.13 Uncouplers of oxidative phosphorylation via disruption of the proton gradient: chlorfenapyr, DNOC, sulfluramid;
   0.14 Nicotinic acetylcholine receptor (nAChR) channel blockers: bensultap, cartap hydrochloride, thiocyclam, thiosultap sodium;
   0.15 Inhibitors of the chitin biosynthesis type 0: bistrifluron, chlorfluazuron, diflubenzuron, flucycloxuron, flufenoxuron, hexaflumuron, lufenuron, novaluron, noviflumuron, teflubenzuron, triflumuron;
   0.16 Inhibitors of the chitin biosynthesis type 1: buprofezin;
   0.17 Moulting disruptors: cyromazine;
   0.18 Ecdyson receptor agonists: methoxyfenozide, tebufenozide, halofenozide, fufenozide, chromafenozide;
   0.19 Octopamin receptor agonists: amitraz;
   O.20 Mitochondrial complex III electron transport inhibitors: hydramethylnon, acequinocyl, fluacrypyrim, bifenazate;
   0.21 Mitochondrial complex I electron transport inhibitors: fenazaquin, fenpyroximate, pyrimidifen, pyridaben, tebufenpyrad, tolfenpyrad; rotenone;
   O.22 Voltage-dependent sodium channel blockers: indoxacarb, metaflumizone, 2-[2-(4-cyanophenyl)-1-[3-(trifluoromethyl)phenyl]ethylidene]-*N*-[4-(difluoromethoxy)phenyl]-hydrazine-carboxamide, *N*-(3-chloro-2-methylphenyl)-2-[(4-chlorophenyl)-[4-[methyl(methylsulfonyl)-amino]phenyl]methylene]-hydrazinecarboxamide;
   O.23 Inhibitors of the of acetyl CoA carboxylase: spirodiclofen, spiromesifen, spirotetramat, spiropidion;
   O.24 Mitochondrial complex IV electron transport inhibitors: aluminium phosphide, calcium phosphide, phosphine, zinc phosphide, cyanide;
   O.25 Mitochondrial complex II electron transport inhibitors: cyenopyrafen, cyflumetofen;
   O.26 Ryanodine receptor-modulators: flubendiamide, chlorantraniliprole, cyantraniliprole, cyclaniliprole, tetraniliprole; (*R*)-3-chloro-*N*¹-{2-methyl-4-[1,2,2,2-tetrafluoro-1-(trifluoromethyl)-ethyl]phenyl}-*N*²-(1-methyl-2-methylsulfonylethyl)phthalamide, (*S*)-3-chloro-*N*¹-{2-methyl-4-[1,2,2,2-tetrafluoro-1-(trifluoromethyl)ethyl]phenyl}-*N*²-(1-methyl-2-methylsulfonylethyl)-phthalamide, methyl-2-[3,5-dibromo-2-({[3-bromo-1-(3-chloropyridin-2-yl)-1*H*-pyrazol-5-yl]-carbonyl}amino)benzoyl]-1,2-dimethylhydrazinecarboxylate; *N*-[4,6-dichloro-2-[(diethyllambda-4-sulfanylidene)carbamoyl]-phenyl]-2-(3-chloro-2-pyridyl)-5-(trifluoromethyl)pyrazole-3-carboxamide; *N*-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; *N*-[4-chloro-2-[(di-2-propyllambda-4-sulfanylidene)carbamoyl]-6-methyl-phenyl]-2-(3-chloro-2-pyridyl)-5-(trifluoromethyl)pyrazole-3-carboxamide; *N*-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; *N*-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide; *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide; 3-chloro-1-(3-chloro-2-pyridinyl)-*N*-[2,4-dichloro-6-[[(1-cyano-1-methylethyl)amino]carbonyl]phenyl]-1*H*-pyrazole-5-carboxamide; tetrachlorantraniliprole; *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide; cyhalodiamide;
   O.27: Chordotonal organ modulators - undefined target site: flonicamid;
   O.28. insecticidal compounds of unknown or uncertain mode of action: afidopyropen, afoxolaner, azadirachtin, amidoflumet, benzoximate, broflanilide, bromopropylate, chinomethionat, cryolite, dicloromezotiaz, dicofol, flufenerim, flometoquin, fluensulfone, fluhexafon, fluopyram, fluralaner, metoxadiazone, piperonyl butoxide, pyflubumide, pyridalyl, tioxazafen, 11-(4-chloro-2,6-dimethylphenyl)-12-hydroxy-1,4-dioxa-9-azadispiro[4.2.4.2]-tetradec-11-en-10-one, 3-(4'-fluoro-2,4-dimethylbiphenyl-3-yl)-4-hydroxy-8-oxa-1-azaspiro[4.5]dec-3-en-2-one, 1-[2-fluoro-4-methyl-5-[(2,2,2-trifluoroethyl)sulfinyl]phenyl]-3-(trifluoromethyl)-1*H*-1,2,4-triazole-5-amine, *Bacillus firmus* I-1582; flupyrimin; fluazaindolizine; 4-[5-(3,5-dichlorophenyl)-5-(trifluoromethyl)-4*H*-isoxazol-3-yl]-2-methyl-*N*-(1-oxothietan-3-yl)benzamide; fluxametamide; 5-[3-[2,6-dichloro-4-(3,3-dichloroallyloxy)phenoxy]propoxy]-1*H*-pyrazole; 4-cyano-*N*-[2-cyano-5-[[2,6-dibromo-4-[1,2,2,3,3,3-hexafluoro-1-(trifluoromethyl)propyl]phenyl]carbamoyl]phenyl]-2-methyl-benzamide; 4-cyano-3-[(4-cyano-2-methyl-benzoyl)amino]-*N*-[2,6-dichloro-4-[1,2,2,3,3,3-hexafluoro-1-(trifluoromethyl)propyl]phenyl]-2-fluoro-benzamide; *N*-[5-[[2-chloro-6-cyano-4-[1,2,2,3,3,3-hexafluoro-1-(trifluoromethyl)propyl]phenyl]-carbamoyl]-2-cyano-phenyl]-4-cyano-2-methyl-benzamide; *N*-[5-[[2-bromo-6-chloro-4-[2,2,2-trifluoro-1-hydroxy-1-(trifluoromethyl)ethyl]phenyl]carbamoyl]-2-cyano-phenyl]-4-cyano-2-methyl-benzamide; *N*-[5-[[2-bromo-6-chloro-4-[1,2,2,3,3,3-hexafluoro-1-(trifluoromethyl)propyl]phenyl]carbamoyl]-2-cyano-phenyl]-4-cyano-2-methyl-benzamide; 4-cyano-*N*-[2-cyano-5-[[2,6-dichloro-4-[1,2,2,3,3,3-hexafluoro-1-(trifluoromethyl)propyl]phenyl]carbamoyl]-phenyl]-2-methyl-benzamide; 4-cyano-*N*-[2-cyano-5-[[2,6-dichloro-4-[1,2,2,2-tetrafluoro-1-(trifluoromethyl)ethyl]phenyl]carbamoyl]phenyl]-2-methyl-benzamide; *N*-[5-[[2-bromo-6-chloro-4-[1,2,2,2-tetrafluoro-1-(trifluoromethyl)ethyl]phenyl]carbamoyl]-2-cyano-phenyl]-4-cyano-2-methyl-benzamide; 2-(1,3-dioxan-2-yl)-6-[2-(3-pyridinyl)-5-thiazolyl]-pyridine; 2-[6-[2-(5-fluoro-3-pyridinyl)-5-thiazolyl]-2-pyridinyl]-pyrimidine; 2-[6-[2-(3-pyridinyl)-5-thiazolyl]-2-pyridinyl]-pyrimidine; *N*-methylsulfonyl-6-[2-(3-pyridyl)thiazol-5-yl]pyridine-2-carboxamide; *N*-methylsulfonyl-6-[2-(3-pyridyl)thiazol-5-yl]pyridine-2-carboxamide; 1-[(6-chloro-3-pyridinyl)methyl]-1,2,3,5,6,7-hexahydro-5-methoxy-7-methyl-8-nitro-imidazo[1,2-a]pyridine; 1-[(6-chloropyridin-3-yl)methyl]-7-methyl-8-nitro-1,2,3,5,6,7-hexahydroimidazo[1,2-a]pyridin-5-ol; 1-isopropyl-*N*,5-dimethyl-*N*-pyridazin-4-yl-pyrazole-4-carboxamide; 1-(1,2-dimethylpropyl)-*N*-ethyl-5-methyl-*N*-pyridazin-4-yl-pyrazole-4-carboxamide; *N*,5-dimethyl-*N*-pyridazin-4-yl-1-(2,2,2-trifluoro-1-methyl-ethyl)pyrazole-4-carboxamide; 1-[1-(1-cyanocyclopropyl)ethyl]-*N*-ethyl-5-methyl-*N*-pyridazin-4-yl-pyrazole-4-carboxamide; *N*-ethyl-1-(2-fluoro-1-methylpropyl)-5-meth-yl-*N*-pyridazin-4-yl-pyrazole-4-carboxamide; 1-(1,2-dimethylpropyl)-*N*,5-dimethyl-*N*-pyridazin-4-yl-pyrazole-4-carboxamide; 1-[1-(1-cyanocyclopropyl)ethyl]-*N*,5-dimethyl-*N*-pyridazin-4-yl-pyrazole-4-carboxamide; *N*-methyl-1-(2-fluoro-1-methyl-propyl]-5-methyl-*N*-pyridazin-4-yl-pyrazole-4-carboxamide; 1-(4,4-difluorocyclohexyl)-*N*-ethyl-5-methyl-*N*-pyridazin-4-yl-pyrazole-4-carboxamide; 1-(4,4-difluorocyclohexyl)-*N*,5-dimethyl-*N*-pyridazin-4-yl-pyrazole-4-carboxamide, *N*-(1-methylethyl)-2-(3-pyridinyl)-2*H*-indazole-4-carboxamide; *N*-cyclopropyl-2-(3-pyridinyl)-2*H*-indazole-4-carboxamide; *N*-cyclohexyl-2-(3-pyridinyl)-2*H*-indazole-4-carboxamide; 2-(3-pyridinyl)-*N*-(2,2,2-trifluoroethyl)-2*H*-indazole-4-carboxamide; 2-(3-pyridinyl)-*N*-[(tetrahydro-2-furanyl)methyl]-2*H*-indazole-5-carboxamide; methyl 2-[[2-(3-pyridinyl)-2*H*-indazol-5-yl]carbonyl]hydrazinecarboxylate; *N*-[(2,2-difluorocyclopropyl)methyl]-2-(3-pyridinyl)-2*H*-indazole-5-carboxamide; *N*-(2,2-difluoropropyl)-2-(3-pyridinyl)-2*H*-indazole-5-carboxamide; 2-(3-pyridinyl)-*N*-(2-pyrimidinylmethyl)-2*H*-indazole-5-carboxamide; *N*-[(5-methyl-2-pyrazinyl)methyl]-2-(3-pyridinyl)-2*H*-indazole-5-carboxamide, tyclopyrazoflor; sarolaner, lotilaner, *N*-[4-chloro-3-[[(phenylmethyl)amino]carbonyl]-phenyl]-1-methyl-3-(1,1,2,2,2-pentafluoroethyl)-4-(trifluoromethyl)-1*H*-pyrazole-5-carboxamide; 2-(3-ethylsulfonyl-2-pyridyl)-3-methyl-6-(trifluoromethyl)imidazo[4,5-b]pyridine, 2-[3-ethylsulfonyl-5-(trifluoromethyl)-2-pyridyl]-3-methyl-6-(trifluoromethyl)imidazo[4,5-b]pyridine, isocycloseram, *N*-[4-chloro-3-(cyclopropylcarbamoyl)phenyl]-2-methyl-5-(1,1,2,2,2-pentafluoroethyl)-4-(trifluoromethyl)pyrazole-3-carboxamide, *N*-[4-chloro-3-[(1-cyanocyclopropyl)carbamoyl]phenyl]-2-methyl-5-(1,1,2,2,2-pentafluoroethyl)-4-(trifluoromethyl)pyrazole-3-carboxamide; acynonapyr; benzpyrimoxan; tigolaner; chloro-*N*-(1-cyanocyclopropyl)-5-[1-[2-methyl-5-(1,1,2,2,2-pentafluoroethyl)-4-(trifluoromethyl)pyrazol-3-yl]pyrazol-4-yl]benzamide, oxazosulfyl, [(2*S*,3*R*,4*R*,5*S*,6*S*)-3,5-dimethoxy-6-methyl-4-propoxy-tetrahydropyran-2-yl]-*N*-[4-[1-[4-(trifluoromethoxy)phenyl]-1,2,4-triazol-3-yl]phenyl]carbamate, [(2*S*,3*R*,4*R*,5*S*,6*S*)-3,4,5-trimethoxy-6-methyl-tetrahydropyran-2-yl] N-[4-[1-[4-(trifluoromethoxy)phenyl]-1,2,4-triazol-3-yl]phenyl]carbamate, [(2*S*,3*R*,4*R*,5*S*,6*S*)-3,5-dimethoxy-6-methyl-4-propoxy-tetrahydropyran-2-yl]-*N*-[4-[1-[4-(1,1,2,2,2-pentafluoroethoxy)phenyl]-1,2,4-triazol-3-yl]phenyl]carbamate, [(2*S*,3*R*,4R,5*S*,6*S*)-3,4,5-trimethoxy-6-methyl-tetrahydropyran-2-yl]-*N*-[4-[1-[4-(1,1,2,2,2-pentafluoroethoxy)phenyl]-1,2,4-triazol-3-yl]phenyl]carbamate, (2*Z*)-3-(2-isopropylphenyl)-2-[(*E*)-[4-[1-[4-(1,1,2,2,2-pentafluoroethoxy)phenyl]-1,2,4-triazol-3-yl]phenyl]methylenehydrazono]thiazolidin-4-one; 2-(6-chloro-3-ethylsulfonyl-imidazo[1,2-a]pyridin-2-yl)-3-methyl-6-(trifluoromethyl)imidazo[4,5-b]pyridine, 2-(6-bromo-3-ethylsulfonyl-imidazo[1,2-a]pyridin-2-yl)-3-methyl-6-(trifluoromethyl)imidazo[4,5-b]pyridine, 2-(3-ethylsulfonyl-6-iodo-imidazo[1,2-a]pyridin-2-yl)-3-methyl-6-(trifluoromethyl)imidazo-[4,5-b]pyridine, 2-[3-ethylsulfonyl-6-(trifluoromethyl)imidazo[1,2-a]pyridin-2-yl]-3-methyl-6-(trifluoromethyl)imidazo[4,5-b]pyridine, 2-(7-chloro-3-ethylsulfonyl-imidazo[1,2-a]pyridin-2-yl)-3-methyl-6-(trifluoromethyl)imidazo[4,5-b]pyridine, 2-(3-ethylsulfonyl-7-iodo-imidazo[1,2-a]pyridin-2-yl)-3-methyl-6-(trifluoromethyl)imidazo[4,5-b]pyridine, 3-ethylsulfonyl-6-iodo-2-[3-methyl-6-(trifluoromethyl)imidazo[4,5-b]pyridin-2-yl]imidazo[1,2-a]pyridine-8-carbonitrile, 2-[3-ethylsulfonyl-8-fluoro-6-(trifluoromethyl)imidazo[1,2-a]pyridin-2-yl]-3-methyl-6-(trifluoromethyl)imidazo[4,5-b]pyridine, 2-[3-ethylsulfonyl-7-(trifluoromethyl)imidazo[1,2-a]pyridin-2-yl]-3-methyl-6-(trifluoromethylsulfinyl)imidazo[4,5-b]pyridine, 2-[3-ethylsulfonyl-7-(trifluoromethyl)imidazo[1,2-a]pyridin-2-yl]-3-methyl-6-(trifluoromethyl)imidazo[4,5-c]pyridine, 2-(6-bromo-3-ethylsulfonyl-imidazo[1,2-a]pyridin-2-yl)-6-(trifluoromethyl)pyrazolo[4,3-c]pyridine.

The active substances referred to as compound III, their preparation and their activity e. g. against harmful fungi is known (cf.: http://www.alanwood.net/pesticides/); these substances are commercially available. The compounds described by IUPAC nomenclature, their preparation and their pesticidal activity are also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 10/139271, WO 11/028657, WO 12/168188, WO 07/006670, WO 11/77514; WO 13/047749, WO 10/069882, WO 13/047441, WO 03/16303, WO 09/90181, WO 13/007767, WO 13/010862, WO 13/127704, WO 13/024009, WO 13/24010, WO 13/047441, WO 13/162072, WO 13/092224, WO 11/135833, CN 1907024, CN 1456054, CN 103387541, CN 1309897, WO 12/84812, CN 1907024, WO 09094442, WO 14/60177, WO 13/116251, WO 08/013622, WO 15/65922, WO 94/01546, EP 2865265, WO 07/129454, WO 12/165511, WO 11/081174, WO 13/47441, WO 16/156241, WO 16/162265). Some compounds are identified by their CAS Registry Number which is separated by hyphens into three parts, the first consisting from two up to seven digits, the second consisting of two digits, and the third consisting of a single digit.

In the ternary mixtures, i.e. compositions comprising compound I, compound II and compound III, the weight ratio of compound I and compound II depends from the properties of the active substances used, usually it is in the range of from 1:100 to 100:1, regularly from 1:50 to 50:1, preferably from 1:20 to 20:1, more preferably from 1:10 to 10:1 and in particular from 1:4 to 4:1, and the weight ratio of compound I and compound III usually it is in the range of from 1:100 to 100:1, regularly from 1:50 to 50:1, preferably from 1:20 to 20:1, more preferably from 1:10 to 10:1 and in particular from 1:4 to 4:1. Any further active components are, if desired, added in a ratio of from 20:1 to 1:20 to the compound I. These ratios are also suitable for mixtures applied by seed treatment.

Especially preferred compounds III are Mefentrifluconazol, Fluxapyroxad, Pyraclostrobin, copper oxychloride, Mancozeb, Chlorothalonil, Prothioconazole, Difenoconazole, Pydiflumetofen, Benzovindiflupy, Impyrfluxam, Fluindapyr, Epoxiconazole, Tebuconazole, Metconazole, Fenpropimorph, Fenpropidin and Fluoxytioconazole.

Particularly preferred mixtures are the following:

| Mixture | Component 1 (Compound I) | Component 2 (Compound II) | Component 3 (Compound III) |
|---|---|---|---|
| 1-1.1 | I | II-1 | mefentrifluconazol |
| 1-2.1 | I | II-2 | Mefentrifluconazol |
| 1-3.1 | I | II-1, II-2 | Mefentrifluconazol |
| 1-1.2 | I | II-1 | Fluxapyroxad |
| 1-2.2 | I | II-2 | Fluxapyroxad |
| 1-3.2 | I | II-1, II-2 | Fluxapyroxad |
| 1-1.3 | I | II-1 | Pyraclostrobin |
| 1-2.3 | I | II-2 | Pyraclostrobin |
| 1-3.3 | I | II-1, II-2 | Pyraclostrobin |
| 1-1.4 | I | II-1 | copper oxychloride |
| 1-2.4 | I | II-2 | copper oxychloride |
| 1-3.4 | I | II-1, II-2 | copper oxychloride |
| 1-1.5 | I | II-1 | Mancozeb |
| 1-2.5 | I | II-2 | Mancozeb |
| 1-3.5 | I | II-1, II-2 | Mancozeb |
| 1-1.6 | I | II-1 | Chlorothalonil |
| 1-2.6 | I | II-2 | Chlorothalonil |
| 1-3.6 | I | II-1, II-2 | Chlorothalonil |
| 1-1.7 | I | II-1 | Prothioconazole |
| 1-2.7 | I | II-2 | Prothioconazole |
| 1-3.7 | I | II-1, II-2 | Prothioconazole |
| 1-1.8 | I | II-1 | Difenoconazole |
| 1-2.8 | I | II-2 | Difenoconazole |
| 1-3.8 | I | II-1, II-2 | Difenoconazole |
| 1-1.9 | I | II-1 | Pydiflumetofen |
| 1-2.9 | I | II-2 | Pydiflumetofen |
| 1-3.9 | I | II-1, II-2 | Pydiflumetofen |
| 1-1.10 | I | II-1 | Benzovindiflupy |
| 1-2.10 | I | II-2 | Benzovindiflupy |
| 1-3.10 | I | II-1, II-2 | Benzovindiflupy |
| 1-1.11 | I | II-1 | Impyrfluxam |
| 1-2.11 | I | II-2 | Impyrfluxam |
| 1-3.11 | I | II-1, II-2 | Impyrfluxam |
| 1-1.12 | I | II-1 | Fluindapyr |
| 1-2.12 | I | II-2 | Fluindapyr |
| 1-3.12 | I | II-1, II-2 | Fluindapyr |
| 1-1.13 | I | II-1 | Epoxiconazole |
| 1-2.13 | I | II-2 | Epoxiconazole |
| 1-3.13 | I | II-1, II-2 | Epoxiconazole |
| 1-1.14 | I | II-1 | Tebuconazole |
| 1-2.14 | I | II-2 | Tebuconazole |
| 1-3.14 | I | II-1, II-2 | Tebuconazole |
| 1-1.15 | I | II-1 | Metconazole |
| 1-2.15 | I | II-2 | Metconazole |
| 1-3.15 | I | II-1, II-2 | Metconazole |
| 1-1.16 | I | II-1 | Fenpropimorph |
| 1-2.16 | I | II-2 | Fenpropimorph |
| 1-3.16 | I | II-1, II-2 | Fenpropimorph |
| 1-1.17 | I | II-1 | Fenpropidin. |
| 1-2.17 | I | II-2 | Fenpropidin. |
| 1-3.17 | I | II-1, II-2 | Fenpropidin. |
| 1-1.18 | I | II-1 | Fluoxytioconazole. |
| 1-2.18 | I | II-2 | Fluoxytioconazole. |
| 1-3.18 | I | II-1, II-2 | Fluoxytioconazole. |

All above-referred mixtures are herein below referred to as "inventive mixtures" or "mixtures according to the invention".

The inventive mixtures can further contain one or more insecticides, fungicides, herbicides.

The inventive mixtures can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzyl alcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methyl pyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol. 1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are homo- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the inventive mixtures on the target. Examples are surfactants, mineral or vegetable oils, and other auxiliaries. Further examples are listed in Knowles, Adjuvants and additives, Agrow Reports DS256, T&F Informa UK, 2006, chapter 5.

Suitable thickeners are polysaccharides (e.g. xanthan gum, carboxymethylcellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidones, polyvinylacetates, polyvinyl alcohols, polyacrylates, biological or synthetic waxes, and cellulose ethers.

Examples for composition types and their preparation are:
i) Water-soluble concentrates (SL, LS)
   10-60 wt% of an inventive mixture and 5-15 wt% wetting agent (e.g. alcohol alkoxylates) are dissolved in water and/or in a water-soluble solvent (e.g. alcohols) ad 100 wt%. The active substance dissolves upon dilution with water.
ii) Dispersible concentrates (DC)
   5-25 wt% of an inventive mixture and 1-10 wt% dispersant (e. g. polyvinylpyrrolidone) are dissolved in organic solvent (e.g. cyclohexanone) ad 100 wt%. Dilution with water gives a dispersion.
iii) Emulsifiable concentrates (EC)
   15-70 wt% of an inventive mixture and 5-10 wt% emulsifiers (e.g. calcium dodecylbenzene sulfonate and castor oil ethoxylate) are dissolved in water-insoluble organic solvent (e.g. aromatic hydrocarbon) ad 100 wt%. Dilution with water gives an emulsion.
iv) Emulsions (EW, EO, ES)
   5-40 wt% of an inventive mixture and 1-10 wt% emulsifiers (e.g. calcium dodecylbenzene sulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.
v) Suspensions (SC, OD, FS)
   In an agitated ball mill, 20-60 wt% of an inventive mixture are comminuted with addition of 2-10 wt% dispersants and wetting agents (e.g. sodium lignosulfonate and alcohol ethoxylate), 0.1-2 wt% thickener (e.g. xanthan gum) and water ad 100 wt% to give a fine active substance suspension. Dilution with water gives a stable suspension of the active substance. For FS type composition up to 40 wt% binder (e.g. polyvinyl alcohol) is added.
vi) Water-dispersible granules and water-soluble granules (WG, SG)
   50-80 wt% of an inventive mixture are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.
vii) Water-dispersible powders and water-soluble powders (WP, SP, WS)
   50-80 wt% of an inventive mixture are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.
viii) Gel (GW, GF)
   In an agitated ball mill, 5-25 wt% of an inventive mixture are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.
iv) Microemulsion (ME)
   5-20 wt% of an inventive mixture are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 %. This mixture is stirred for 1 h to produce spontaneously a thermodynamically stable microemulsion.
iv) Microcapsules (CS)
   An oil phase comprising 5-50 wt% of an inventive mixture, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of an inventive mixture according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.
ix) Dustable powders (DP, DS)
   1-10 wt% of an inventive mixture are ground finely and mixed intimately with solid carrier (e.g. finely divided kaolin) ad 100 wt%.
x) Granules (GR, FG)
   0.5-30 wt% of an inventive mixture is ground finely and associated with solid carrier (e.g. silicate) ad 100 wt%. Granulation is achieved by extrusion, spray-drying or fluidized bed.
xi) Ultra-low volume liquids (UL)
   1-50 wt% of an inventive mixture are dissolved in organic solvent (e.g. aromatic hydrocarbon) ad 100 wt%.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The resulting agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying the inventive mixtures and compositions thereof, respectively, on to plant propagation material, especially seeds include dressing, coating, pelleting, dusting, soaking and in-furrow application methods of the propagation material. Preferably, the inventive mixtures or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.01 to 1.0 kg per ha, and in particular from 0.05 to 0.75 kg per ha.

In treatment of plant propagation materials such as seeds, e. g. by dusting, coating or drenching seed, amounts of active substance of from 0.01-10 kg, preferably from 0.1-1000 g, more preferably from 1-100 g per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary mixture may be mixed by the user himself in a spray tank or any other kind of vessel used for applications (e. g. seed treater drums, seed pelleting machinery, knapsack sprayer) and further auxiliaries may be added, if appropriate. Consequently, one embodiment of the invention is a kit for preparing a usable pesticidal composition, the kit comprising a) a composition comprising component 1) as defined herein and at least one auxiliary; and b) a composition comprising component 2) as defined herein and at least one auxiliary; and optionally c) a composition comprising at least one auxiliary and optionally a further active component 3) as defined herein.
As said above, the present invention comprises a method for controlling harmful fungi, wherein the pest, their habitat, breeding grounds, their locus or the plants to be protected against pest attack, the soil or plant propagation material (preferably seed) are treated with a pesticidally effective amount of an inventive mixture.

Advantageously, the inventive mixtures are suitable for controlling the following fungal plant diseases:
*Albugo* spp. (white rust) on ornamentals, vegetables (e. g. *A. candida*) and sunflowers (e. g. *A. tragopogonis*); *Alternaria* spp. (Alternaria leaf spot) on vegetables, rape (*A. brassicola* or *brassi*cae), sugar beets (*A. tenuis*), fruits, rice, soybeans, potatoes (e. g. *A. solani* or *A. alternata*), tomatoes (e. g. *A. solani* or *A. alternata)* and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight (*D. maydis)* or Northern leaf blight *(B. zeicola)* on corn, e. g. spot blotch (*B*. *sorokiniana*) on cereals and e. g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn (e. g. Gray leaf spot: *C. zeae-maydis*)*,* rice, sugar beets (e. g. *C. beticola*)*,* sugar cane, vegetables, coffee, soybeans (e. g. *C. sojina* or *C. kikuchii*) and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*)*,* corn (e. g. *C. graminicola:* Anthracnose stalk rot), soft fruits, potatoes (e. g. *C. coccodes:* black dot), beans (e. g. *C. lindemuthianum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia) necatrix* (root and stem rot) on soybeans; *Diaporthe* spp., e. g. *D. phaseolorum* (damping off) on soybeans; *Drechslera* (syn. *Helminthosporium,* teleomorph: *Pyrenophora)* spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus) punctata, F. mediterranea, Phaeomoniella chlamydospora* (earlier *Phaeoacremonium chlamydosporum), Phaeoacremonium aleophilum* and/or *Botryosphaeria obtusa; Elsinoe* spp. on pome fruits (*E. pyri*), soft fruits (*E. veneta:* anthracnose) and vines (*E. ampelina:* anthracnose); *Entyloma oryzae* (leaf smut) on rice; *Epicoccum* spp. (black mold) on wheat; *Erysiphe* spp. (powdery mildew) on sugar beets (*E*. *betae*), vegetables (e. g. *E. pisi*), such as cucurbits (e. g. *E. cichoracearum*)*,* cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme*) and *F. tucumani*ae and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi:* Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M.A. laxa, M.A. fructicola* and *M.A. fructigena* (bloom and twig blight, brown rot) on stone fruits and other rosaceous plants; *Mycosphaerella* spp. on cereals, bananas, soft fruits and ground nuts, such as e. g. *M.A. graminicola* (anamorph: *Septoria tritici,* Septoria blotch) on wheat or *M.A. fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P. tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola:* can and leaf spot) and soybeans (e. g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans:* late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or 'rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. S. *sclerotiorum*) and soybeans (e. g. *S. rolfsii* or *S. sclerotiorum*); *Septoria* spp. on various plants, e. g. *S. glycines* (brown spot) on soybeans, *S. tritici* (Septoria blotch) on wheat and *S.* (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans); Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli)* and sugar beets (e. g. *U. betae); Ustilago* spp. (loose smut) on cereals (e. g. *U. nuda* and *U. avaenae),* corn (e. g. *U. maydis:* corn smut) and sugar cane; *Venturia* spp. (scab) on apples (e. g. *V. inaequalis)* and pears; and *Verticillium* spp. (wilt) on various plants, such as fruits and ornamentals, vines, soft fruits, vegetables and field crops, e. g. *V. dahliae* on strawberries, rape, potatoes and tomatoes.

The mixtures according to the present invention, respectively, are also suitable for controlling harmful fungi in the protection of stored products or harvest and in the protection of materials.

The term "protection of materials" is to be understood to denote the protection of technical and non-living materials, such as adhesives, glues, wood, paper and paperboard, textiles, leather, paint dispersions, plastics, cooling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coni-ophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichoderma* spp., *Alternaria* spp., *Paecilomyces* spp. and Zygomycetes such as *Mucor* spp., and in addition in the protection of stored products and harvest the following yeast fungi are worthy of note: *Candida* spp. and *Saccharomyces cerevisiae.*

They are also important for controlling a multitude of fungi on various cultivated plants, such as bananas, cotton, vegetable species (for example cucumbers, beans and cucurbits), cereals such as wheat, rye, barley, rice, oats; grass coffee, potatoes, corn, fruit species, soya, tomatoes, grapevines, ornamental plants, sugar cane and also on a large number of seeds. In a preferred embodiment, the inventive mixtures are used in soya (soybean), cereals and corn.

The inventive mixtures are particularly suitable for controlling wheat diseases caused by Alternaria spp. (Alternaria leaf spot), Ascochyta tritici (anthracnose), Blumeria (formerly Erysiphe) graminis (powdery mildew), Botrytis cinerea (teleomorph: Botryotinia fuckeliana: grey mold), Cladosporium herbarum (black ear), Drechslera (syn. Helminthosporium, teleomorph: Pyrenophora) tritici-repentis (tan spot), Epicoccum spp. (black mold), Fusarium (teleomorph: Gibberella) graminearum or Fusarium culmorum (root rot, scab or head blight), Gaeumannomyces graminis (take-all), Microdochium (syn. Fusarium) nivale (pink snow mold), Mycosphaerella 15 graminicola (anamorph: Septoria tritici, Septoria blotch), Polymyxa graminis, Pseudocercosporella herpotrichoides (eyespot, teleomorph: Tapesia yallundae), Puccinia graminis (stem or black rust), Puccinia recondita (brown or leaf rust), Pyrenophora (anamorph: Drechslera) triticirepentis (tan spot), Pythium spp. (damping-off), Rhizoctonia cerealis (Rhizoctonia spring blight), Septoria tritici (Septoria blotch), Stagonospora nodorum (Stagonospora blotch, teleomorph: Leptosphaeria [syn. Phaeosphaeria] nodorum), Tilletia. tritici (syn. Tilletia caries, wheat bunt), T. controversa (dwarf bunt) or Typhula incarnata (grey snow mold).

The inventive mixtures are also particularly suitable for controlling barley diseases caused by Ascochyta hordei, Bipolaris (teleomorph: Cochliobolus, spot blotch) sorokiniana, Blumeria (formerly Erysiphe) graminis (powdery mildew), Botrytis cinerea (teleomorph: Botryotinia fuckeliana : grey mold), Cladosporium herbarum (black ear), Claviceps purpurea (ergot), Cochliobolus (anamorph: Helminthosporium of Bipolaris) sativus, Drechslera (syn. Helminthosporium, teleomorph: Pyrenophora) teres, Epicoccum spp. (black mold), Fusarium (teleomorph: Gibberella) culmorum (root rot, scab or head blight) on cereals (e.g. wheat or barley), Gaeumannomyces graminis (take-all), Gibberella spp. (e. g. G. zeae), Helmintho-sporium spp. (syn. Drechslera , teleomorph: Cochliobolus), Microdochium (syn. Fusarium) nivale (pink snow mold), Mycosphaerella spp. , Polymyxa spp., Pseudocercosporella herpotrichoides (eyespot, teleomorph: Tapesia yallundae), Puccinia recondita (brown or leaf rust), Pyrenophora (anamorph: Drechslera) teres (net blotch), Pyricularia grisea, Ramularia collo-cygni (Ramularia leaf spots, Physiological leaf spots), Rhizoctonia cerealis (Rhizoctonia spring blight), Rhynchosporium secalis (scald), Septoria (syn. Stagonospora) nodorum (Stagonospora blotch), Stagonospora spp. , Tilletia spp. (common bunt or stinking smut), Typhula incarnata (grey snow mold), or Ustilago spp. (loose smut), e. g. U. nuda and U. avaenae.

The inventive mixtures are particularly suitable for controlling wheat diseases caused by Septoria tritici, Microduchium nivale, Erysiphe graminis tritici, Phaeospheria nodorum or Pyrenophera tritici-repentis.
The inventive mixtures are also particularly suitable for controlling barley diseases caused by Erysiphe graminis hordei, Pyrenophera teres, Ramularia collicygni or Rynchosporium secalis. The inventive mixtures are also particularly suitable for controlling wheat diseases caused by Puccinia recondita (brown or leaf rust), Puccinia striiformis (stripe or yellow rust), or Puccinia graminis (stem or black rust).
The inventive mixtures are also particularly suitable for controlling barley diseases caused by Puccinia recondita (brown or leaf rust), Puccinia striiformis (stripe or yellow rust), or Puccinia graminis (stem or black rust).

The mixtures according to the present invention are especially useful for controlling phytopathogenic fungi in cereals such as wheat, barley or rye, especially on wheat and barley.

In one especially preferred embodiment, the inventive mixtures are used for controlling the following phytopathogenic fungi on wheat: Septoria tritici, Pyrenophera tritici-repentis, Microduchium nivale, Erysiphe graminis tritici or Phaeospheria nodorum.

In one especially preferred embodiment, the inventive mixtures are used for controlling the following phytopathogenic fungi on barley: Erysiphe graminis hordei, Pyrenophera teres, Ramularia collicygni or Rynchosporium secalis.

In one especially preferred embodiment, the inventive mixtures are used for controlling the following phytopathogenic fungi on wheat, barley or rye: Puccinia recondita (brown or leaf rust), Puccinia striiformis (stripe or yellow rust), or Puccinia graminis (stem or black rust).

In preferred embodiments, the following inventive mixtures can be used on the following crops and pests:

| Compound I | Compound II | Crop | Disease |
|---|---|---|---|
| Metyltetraprole | II-2 | wheat | Microduchium nivale |
| Metyltetraprole | II-2 | wheat | Erysiphe graminis tritici |
| Metyltetraprole | II-2 | wheat | Septoria tritici |
| Metyltetraprole | II-2 | wheat | Phaeospheria nodorum |
| Metyltetraprole | II-2 | wheat | Pyrenophera tritici-repentis |
| Metyltetraprole | II-2 | wheat | Puccinia recondita |
| Metyltetraprole | II-2 | wheat | Puccinia striiformis |
| Metyltetraprole | II-2 | wheat | Puccinia graminis |
| Metyltetraprole | II-2 | barley | Erysiphe graminis hordei |
| Metyltetraprole | II-2 | barley | Pyrenophera teres |
| Metyltetraprole | II-2 | barley | Ramularia collicygni |
| Metyltetraprole | II-2 | barley | Rynchosporium secalis |
| Metyltetraprole | II-2 | barley | Puccinia recondita |
| Metyltetraprole | II-2 | barley | Puccinia striiformis |
| Metyltetraprole | II-2 | barley | Puccinia graminis |
| Metyltetraprole | II-2 | rye | Puccinia recondita |
| Metyltetraprole | II-2 | rye | Puccinia striiformis |
| Metyltetraprole | II-2 | rye | Puccinia graminis |
| Metyltetraprole | II-1 | wheat | Microduchium nivale |
| Metyltetraprole | II-1 | wheat | Erysiphe graminis tritici |
| Metyltetraprole | II-1 | wheat | Septoria tritici |
| Metyltetraprole | II-1 | wheat | Phaeospheria nodorum |
| Metyltetraprole | II-1 | wheat | Pyrenophera tritici-repentis |
| Metyltetraprole | II-1 | wheat | Puccinia recondita |
| Metyltetraprole | II-1 | wheat | Puccinia striiformis |
| Metyltetraprole | II-1 | wheat | Puccinia graminis |
| Metyltetraprole | II-1 | barley | Erysiphe graminis hordei |
| Metyltetraprole | II-1 | barley | Pyrenophera teres |
| Metyltetraprole | II-1 | barley | Ramularia collicygni |
| Metyltetraprole | II-1 | barley | Rynchosporium secalis |
| Metyltetraprole | II-1 | barley | Puccinia recondita |
| Metyltetraprole | II-1 | barley | Puccinia striiformis |
| Metyltetraprole | II-1 | barley | Puccinia graminis |
| Metyltetraprole | II-1 | rye | Puccinia recondita |
| Metyltetraprole | II-1 | rye | Puccinia striiformis |
| Metyltetraprole | II-1 | rye | Puccinia graminis |

Preferably, the inventive mixtures are suitable for controlling the following fungal diseases on soybeans: *Alternaria* spp. (Alternaria leaf spot); *Cercospora* spp. (Cercospora leaf spots), e. g. *C. sojina* or *C. kikuchii*); *Colletotrichum* (teleomorph: *Glomerella*) spp. (anthracnose), e. g. *C. truncatum* or *C. gloeosporioides*); *Corynespora cassiicola* (leaf spots); *Dematophora* (teleomorph: *Rosellinia*) *necatrix* (root and stem rot); *Diaporthe* spp., e. g. *D. phaseolorum* (damping off); *Fusarium* (teleomorph: *Gibberella*) spp. (wilt, root or stem rot), e.g. *F. tucumaniae* and *F*. *brasiliense* each causing sudden death syndrome on soybeans; *Macrophomina phaseolina* (syn. *phaseoli*) (root and stem rot); *Microsphaera diffusa* (powdery mildew); *Peronospora* spp. (downy mildew), e. g. *P. manshurica; Phakopsora pachyrhizi* and *P. meibomiae* (soybean rust); *Phialophora* spp., e. g. *P. gregata:* stem rot; *Phomopsis* spp., e. g. stem rot: *P. phaseoli* (teleomorph: *Diaporthe phaseolorum*); *Pythium* spp. (damping-off); *Phytophthora* spp. (wilt, root, leaf, fruit and stem root), e. g. *P. megasperma,* syn. *P. sojae*); *Rhizoctonia* spp., e. g. *R. solani* (root and stem rot); *Sclerotinia* spp. (stem rot or white mold); *Septoria* spp., e. g. *S. glycines* (brown spot); *S. rolfsii* (syn. *Athelia rolfsii*); *Thielaviopsis* spp. (black root rot).

More preferably, the inventive mixtures are suitable for controlling the following fungal diseases on soybeans: Alternaria spp. (Alternaria leaf spot); Cercospora spp. (Cercospora leaf spots), e. g. C. sojina or C. kikuchii); Colletotrichum (teleomorph: Glomerella) spp. (anthracnose), e. g. C. truncatum or C. gloeosporioides); Corynespora cassiicola (leaf spots); Diaporthe spp., e. g. D. phaseolorum (damping off); Fusarium (teleomorph: Gibberella) spp. (wilt, root or stem rot), e.g. F. tucumaniae and F. brasiliense each causing sudden death syndrome on soybeans; Macrophomina phaseolina (syn. phaseoli) (root and stem rot); Peronospora spp. (downy mildew), e. g. P. manshurica ; Phakopsora pachyrhizi and P. meibomiae (soybean rust); Phomopsis spp., e. g. stem rot: P. phaseoli (teleomorph: Diaporthe phaseolorum); Phytophthora spp. (wilt, root, leaf, fruit and stem root), e. g. P. megasperma, syn. P. sojae); Rhizoctonia spp., e. g. R. solani (root and stem rot); Septoria spp., e. g. S. glycines (brown spot).

The mixtures according to the present invention are particularly important for controlling phytopathogenic harmful fungi on soybean.
The mixtures according to the present invention are also particularly important for controlling Phakopsora pachyrhizi, P. meibomiae (soybean rust), Cercospora sojina, Cercospora kikuchii, Corynospera cassiicula, Colletotrichum truncatum, Sclerotinia sclerotiorum, Microsphaera diffusa, Septoria glycine, Peronospora manshurica or Diaporthe caulivora (D. phaseolorum var. Caulivora), in each case on soybean

The mixtures according to the present invention are particularly important for controlling Phakopsora pachyrhizi and P. meibomiae (soybean rust).

The mixtures according to the present invention are also particularly important for controlling Cercospora sojina, Cercospora kikuchii or Corynospera cassiicula on soybean.

Preferably, compositions of the invention are applied to the following crops as listed in Table 1.

**Table 1: Preferred combinations of mixtures of the invention and crops**

| Mixture | Component 1 | Component 2 | Crop |
|---|---|---|---|
| 1-1 | I | II-1 | soybean |
| 1-2 | I | II-2 | soybean |
| 1-3 | I | II-1, II-2 | soybean |

Preferably, compositions of the invention as listed in table 2 are applied to the following crops and fungi as listed in Table 2.

**Table 2: Preferred combinations of mixtures of compound I and II of the invention, crops and fungi**

| Mixture | Component 1 | Component 2 | Crop | fungi |
|---|---|---|---|---|
| 1-1 | I | II-1 | soybean | Phakopsora pachyrhizi |
| 1-2 | I | II-2 | soybean | Phakopsora pachyrhizi |
| 1-3 | I | II-1, II-2 | soybean | Phakopsora pachyrhizi |
| 1-1 | I | II-1 | soybean | P. meibomiae (soybean rust) |
| 1-2 | I | II-2 | soybean | P. meibomiae (soybean rust) |
| 1-3 | I | II-1, II-2 | soybean | P. meibomiae (soybean rust) |
| 1-1 | I | II-1 | soybean | Cercospora sojina |
| 1-2 | I | II-2 | soybean | Cercospora sojina |
| 1-3 | I | II-1, II-2 | soybean | Cercospora sojina |
| 1-1 | I | II-1 | soybean | Cercospora kikuchii |
| 1-2 | I | II-2 | soybean | Cercospora kikuchii |
| 1-3 | I | II-1, II-2 | soybean | Cercospora kikuchii |
| 1-1 | I | II-1 | soybean | Colletotrichum truncatum |
| 1-2 | I | II-2 | soybean | Colletotrichum truncatum |
| 1-3 | I | II-1, II-2 | soybean | Colletotrichum truncatum |
| 1-1 | I | II-1 | soybean | Sclerotinia sclerotiorum |
| 1-2 | I | II-2 | soybean | Sclerotinia sclerotiorum |
| 1-3 | I | II-1, II-2 | soybean | Sclerotinia sclerotiorum |
| 1-1 | I | II-1 | soybean | Microsphaera diffusa |
| 1-2 | I | II-2 | soybean | Microsphaera diffusa |
| 1-3 | I | II-1, II-2 | soybean | Microsphaera diffusa |
| 1-1 | I | II-1 | soybean | Septoria glycine |
| 1-2 | I | II-2 | soybean | Septoria glycine |
| 1-3 | I | II-1, II-2 | soybean | Septoria glycine |
| 1-1 | I | II-1 | soybean | Peronospora manshurica |
| 1-2 | I | II-2 | soybean | Peronospora manshurica |
| 1-3 | I | II-1, II-2 | soybean | Peronospora manshurica |
| 1-1 | I | II-1 | soybean | Diaporthe caulivora |
| 1-2 | I | II-2 | soybean | Diaporthe caulivora |
| 1-3 | I | II-1, II-2 | soybean | Diaporthe caulivora |
| 1-1 | I | II-1 | soybean | Corynospera cassiicula |
| 1-2 | I | II-2 | soybean | Corynospera cassiicula |
| 1-3 | I | II-1, II-2 | soybean | Corynospera cassiicula |

In one embodiment, compositions of the invention comprising at least three active compounds as listed in table 3 to 19 are applied to the following crops and pests as listed in Table 3 to 20

**Table 3: Preferred combinations of mixtures of compound I and II of the invention, crops and fungi**

| Mixture | Component 1 | Component 2 | Component 3 | Crop | Fungi |
|---|---|---|---|---|---|
| 1-1.1 | I | II-1 | mefentrifluconazol | soybean | Phakopsora pachyrhizi |
| 1-2.1 | I | II-2 | Mefentrifluconazol | soybean | Phakopsora pachyrhizi |
| 1-3.1 | I | II-1, II-2 | Mefentrifluconazol | soybean | Phakopsora pachyrhizi |
| 1-1.1 | I | II-1 | Mefentrifluconazol | soybean | P. meibomiae (soybean rust) |
| 1-2.1 | I | II-2 | Mefentrifluconazol | soybean | P. meibomiae (soybean rust) |
| 1-3.1 | I | II-1, II-2 | mefentrifluconazol | soybean | P. meibomiae (soybean rust) |
| 1-1.1 | I | II-1 | Mefentrifluconazol | soybean | Cercospora sojina |
| 1-2.1 | I | II-2 | Mefentrifluconazol | soybean | Cercospora sojina |
| 1-3.1 | I | II-1, II-2 | Mefentrifluconazol | soybean | Cercospora sojina |
| 1-1.1 | I | II-1 | Mefentrifluconazol | soybean | Cercospora kikuchii |
| 1-2.1 | I | II-2 | Mefentrifluconazol | soybean | Cercospora kikuchii |
| 1-3.1 | I | II-1, II-2 | Mefentrifluconazol | soybean | Cercospora kikuchii |
| 1-1.1 | I | II-1 | Mefentrifluconazol | soybean | Colletotrichum truncatum |
| 1-2.1 | I | II-2 | Mefentrifluconazol | soybean | Colletotrichum truncatum |
| 1-3.1 | I | II-1, II-2 | Mefentrifluconazol | soybean | Colletotrichum truncatum |
| 1-1.1 | I | II-1 | Mefentrifluconazol | soybean | Sclerotinia sclerotiorum |
| 1-2.1 | I | II-2 | Mefentrifluconazol | soybean | Sclerotinia sclerotiorum |
| 1-3.1 | I | II-1, II-2 | Mefentrifluconazol | soybean | Sclerotinia sclerotiorum |
| 1-1.1 | I | II-1 | Mefentrifluconazol | soybean | Microsphaera diffusa |
| 1-2.1 | I | II-2 | Mefentrifluconazol | soybean | Microsphaera diffusa |
| 1-3.1 | I | II-1, II-2 | Mefentrifluconazol | soybean | Microsphaera diffusa |
| 1-1.1 | I | II-1 | Mefentrifluconazol | soybean | Septoria glycine |
| 1-2.1 | I | II-2 | Mefentrifluconazol | soybean | Septoria glycine |
| 1-3.1 | I | II-1, II-2 | Mefentrifluconazol | soybean | Septoria glycine |
| 1-1.1 | I | II-1 | Mefentrifluconazol | soybean | Peronospora manshurica |
| 1-2.1 | I | II-2 | Mefentrifluconazol | soybean | Peronospora manshurica |
| 1-3.1 | I | II-1, II-2 | Mefentrifluconazol | soybean | Peronospora manshurica |
| 1-1.1 | I | II-1 | Mefentrifluconazol | soybean | Diaporthe caulivora |
| 1-2.1 | I | II-2 | Mefentrifluconazol | soybean | Diaporthe caulivora |
| 1-3.1 | I | II-1, II-2 | Mefentrifluconazol | soybean | Diaporthe caulivora |
| 1-1.1 | I | II-1 | Mefentrifluconazol | soybean | Corynospera cassiicula |
| 1-2.1 | I | II-2 | Mefentrifluconazol | soybean | Corynospera cassiicu la |
| 1-3.1 | I | II-1, II-2 | Mefentrifluconazol | soybean | Corynospera cassiicula |

The third number in the mixture number denotes compound III. For example, mixture 1-1.1 denotes ternary mixture containing Mefentrifluconazol. Mixture 1-1.2 denotes ternary mixture containing Fluxapyroxad.
Table 4 lists preferred uses of mixtures 1-1.2, 1-2.2 and 1-3.2 instead of 1-1.1, 1-2.1 and 1-3.1 and differs from table 3 only in that compound III (component 3) is Fluxapyroxad but is otherwise identical to table 3.
Table 5 lists preferred uses of mixtures1-1.3, 1-2.3 and 1-3.3 instead of 1-1.1, 1-2.1 and 1-3.1 and differs from table 3 only in that compound III (component 3) is Pyraclostrobin but is otherwise identical to table 3.
Table 6 lists preferred uses of mixtures1-1.4, 1-2.4 and 1-3.4 instead of 1-1.1, 1-2.1 and 1-3.1 and differs from table 3 only in that compound III (component 3) is copper oxychloride but is otherwise identical to table 3.
Table 7 lists preferred uses of mixtures1-1.5, 1-2.5 and 1-3.5 instead of 1-1.1, 1-2.1 and 1-3.1 and differs from table 3 only in that compound III (component 3) is Mancozeb but is otherwise identical to table 3.
Table 8 lists preferred uses of mixtures1-1.6, 1-2.6 and 1-3.6 instead of 1-1.1, 1-2.1 and 1-3.1 and differs from table 3 only in that compound III (component 3) is Chlorothalonil but is otherwise identical to table 3.
Table 9 lists preferred uses of mixtures1-1.7, 1-2.7 and 1-3.7 instead of 1-1.1, 1-2.1 and 1-3.1 and differs from table 3 only in that compound III (component 3) is Prothioconazole but is otherwise identical to table 3.
Table 10 lists preferred uses of mixtures1-1.8, 1-2.8 and 1-3.8 instead of 1-1.1, 1-2.1 and 1-3.1 and differs from table 3 only in that compound III (component 3) is Difenoconazole but is otherwise identical to table 3.
Table 11 lists preferred uses of mixtures1-1.9, 1-2.9 and 1-3.9 instead of 1-1.1, 1-2.1 and 1-3.1 and differs from table 3 only in that compound III (component 3) is Pydiflumetofen but is otherwise identical to table 3.
Table 12 lists preferred uses of mixtures 1-1.10, 1-2.10 and 1-3.10 instead of 1-1.1, 1-2.1 and 1-3.1 and differs from table 3 only in that compound III (component 3) is Benzovindiflupy but is otherwise identical to table 3.
Table 13 lists preferred uses of mixtures 1-1.11, 1-2.11 and 1-3.11 instead of 1-1.1, 1-2.1 and 1-3.1 and differs from table 3 only in that compound III (component 3) is Impyrfluxam but is otherwise identical to table 3.
Table 14 lists preferred uses of mixtures1-1.12, 1-2.12 and 1-3.12 instead of 1-1.1, 1-2.1 and 1-3.1 and differs from table 3 only in that compound III (component 3) is Fluindapyr but is otherwise identical to table 3.
Table 15 lists preferred uses of mixtures 1-1.13, 1-2.13 and 1-3.13 instead of 1-1.1, 1-2.1 and 1-3.1 and differs from table 3 only in that compound III (component 3) is Epoxiconazole but is otherwise identical to table 3.
Table 16 lists preferred uses of mixtures1-1.14, 1-2.14 and 1-3.14 instead of 1-1.1, 1-2.1 and 1-3.1 and differs from table 3 only in that compound III (component 3) is Tebuconazole but is otherwise identical to table 3.
Table 17 lists preferred uses of mixtures 1-1.15, 1-2.15 and 1-3.15 instead of 1-1.1, 1-2.1 and 1-3.1 and differs from table 3 only in that compound III (component 3) is Metconazole but is otherwise identical to table 3.
Table 18 lists preferred uses of mixtures1-1.16, 1-2.16 and 1-3.16 instead of 1-1.1, 1-2.1 and 1-3.1 and differs from table 3 only in that compound III (component 3) is Fenpropimorph but is otherwise identical to table 3.
Table 19 lists preferred uses of mixtures 1-1.17, 1-2.17 and 1-3.17 instead of 1-1.1, 1-2.1 and 1-3.1 and differs from table 3 only in that compound III (component 3) is Fenpropidin but is otherwise identical to table 3.
Table 20 lists preferred uses of mixtures1-1.18, 1-2.18 and 1-3.18 instead of 1-1.1, 1-2.1 and 1-3.1 and differs from table 3 only in that compound III (component 3) is Fluoxytioconazole but is otherwise identical to table 3.

Mixtures according to the invention are suitable for combating phytopathogenic fungi, such fungi containing a mutation in the mitochondrial cytochrome b gene conferring resistance to Qo inhibitors, wherein the mutation is G143A or F129L.

The term "cereals" comprises wheat or barley.
These Fungi on wheat or barley containing a mutation in the mitochondrial cytochrome b gene conferring resistance to Qo inhibitors, wherein the mutation is G143A or F129L, are hereinafter referred to as "resistant fungi".

Resistant fungi on wheat or barley in the course of the use of the present invention, wherein the mutation is G143A are Septoria tritici, (leaf blotch) on wheat, Microduchium nivale, (head blight) on wheat, Blumeria graminis f. sp. tritici, (powdery mildew) on wheat, Phaesphaeria nodorum, (leaf blotch) on wheat, Pyrenophora tritici-repentis, (tan spot) on wheat, Rhynchosporium secalis, (leaf blotch) on barley, Blumeria graminis f. sp. hordei, (powdery mildew) on barley and Ramularia collo-cygni, (leaf spot) on barley.
The resistant fungi on wheat or barley in the course of the use of the present invention, wherein the mutation is F129L is Pyrenophora teres, (net blotch) on barley.

In soybean, the following pathogens show increasing resistance towards Qo inhibitors due to their G143A mutation:
Cercospora sojina (frogeye leaf spot) and Corynespora cassiicola (target spot).

Thus, the present invention relates to the use of mixtures according to the invention for combating resistant fungi on cereals, wherein the cereal is wheat, and the resistant fungi is Septoria tritici.
Thus, the present invention relates to the use of mixtures according to the invention for combating resistant fungi on cereals, wherein the cereal is wheat, and the resistant fungi is Microduchium nivale.
Thus, the present invention relates to the use of mixtures according to the invention for combating resistant fungi on cereals, wherein the cereal is wheat, and the resistant fungi is Blumeria graminis f. sp. tritici.
Thus, the present invention relates to the use of mixtures according to the invention for combating resistant fungi on cereals, wherein the cereal is wheat, and the resistant fungi is Phaesphaeria nodorum.
Thus, the present invention relates to the use of mixtures according to the invention for combating resistant fungi on cereals, wherein the cereal is wheat, and the resistant fungi is Pyrenophora tritici-repentis.
Thus, the present invention relates to the use of mixtures according to the invention for combating resistant fungi on cereals, wherein the cereal is barley, and the resistant fungi is Rhynchosporium secalis.
Thus, the present invention relates to the use of mixtures according to the invention for combating resistant fungi on cereals, wherein the cereal is barley, and the resistant fungi is Blumeria graminis f. sp. hordei.
Thus, the present invention relates to the use of mixtures according to the invention for combating resistant fungi on cereals, wherein the cereal is barley, and the resistant fungi is Pyrenophora teres.

Thus, the present invention relates to the use of mixtures according to the invention for combating resistant fungi on cereals, wherein the cereal is barley, and the resistant fungi is Ramularia collo-cygni.

In a more preferred embodiment, the present invention relates to the use of a mixtures according to the invention for combating resistant fungi on cereals, wherein the resistant fungi is Septoria tritici.
In a furthermore preferred embodiment, the present invention relates to the use of mixtures according to the invention for combating resistant fungi on cereals, wherein the cereal is barley, and the resistant fungi is Pyrenophora teres.
In a furthermore preferred embodiment, the present invention relates to the use of mixtures according to the invention for combating resistant fungi on cereals, wherein the cereal is barley, and the resistant fungi is Ramularia collo-cygni.

Thus, the present invention relates to the use of mixtures according to the invention- for combating resistant fungi on cereals, wherein the cereal is wheat, and the resistant fungi is Septoria tritici.
Thus, the present invention relates to the use of mixtures according to the invention- for combating resistant fungi on cereals, wherein the cereal is barley, and the resistant fungi is Pyrenophora teres.
Thus, the present invention relates to the use of mixtures according to the invention- for combating resistant fungi on cereals, wherein the cereal is barley, and the resistant fungi is Ramularia collo-cygni.

The term "fruits" comprises apples or grapes.
The fungi on apples or grapes containing a G143A mutation in the mitochondrial cytochrome b gene conferring resistance to Qo inhibitors are hereinafter referred to as "resistant fungi".
Resistant fungi on apples or grapes in the course of the use of the present invention are Venturia inaequalis (scab) on apple,
Uncinula necator (powdery mildew) on grapes and
Plasmopara viticola (downy mildew) on grapes.

Thus, in a preferred embodiment, the present invention relates to the use of mixtures according to the invention for combating resistant fungi on fruits, wherein the fruit is apple, and the resistant fungi is Venturia inaequalis.
In a further preferred embodiment, the present invention relates to the use of mixtures according to the invention for combating resistant fungi on fruits, wherein the fruit is grape, and the resistant fungi is Plasmopara viticola.
In a further preferred embodiment, the present invention relates to the use of mixtures according to the invention for combating resistant fungi on fruits, wherein the fruit is grape, and the resistant fungi is Uncinula necator.

In a more preferred embodiment, the present invention relates to the use of mixtures according to the invention for combating resistant fungi on fruits, wherein the fruit is apple, and the resistant fungi is Venturia inaequalis.
In a furthermore preferred embodiment, the present invention relates to the use of mixtures according to the invention for combating resistant fungi on fruits, wherein the fruit is grape, and the resistant fungi is Uncinula necator.

Resistant fungi in the course of the use of the present invention, wherein the mutation is G143A are
Pyricularia oryzae (blast) on rice, Ustilago maydis (smut) on maize, Ascochyta rabiei (ascochyta blight) on chickpea, Didymella rabiei (ascochyta blight) on chickpea, Cercospora beticola (leaf spot) on sugar beets, Corynespora cassiicola (target spot) on cucumber, Didymella bryoniae (gummy stem blight) on cucurbits, Didymella bryoniae (gummy stem blight) on watermelon, Podosphera fusca (powdery mildew) on cucumber, Podosphera xanthii (powdery mildew) on cucurbits, Pseudoperenospora cubensis (downy mildew) on cucurbits, Sphaerotheca fuliginea (powdery mildew) on cucumber, Alternaria alternata (leaf spot) on potato, Mycovellosiealla nattrassii (leaf mold) on Eggplant, Stemphylium vesicarium (purple spot) on asparagus, Alternaria alternata (Alternaria blotch) on apple, Alternaria malus (Alternaria blotch) on apple, Alternaria alternata (Alternaria brown spot) on citrus, Alternaria arborescens (Alternria Late blight) on pistachio, Alternaria alternata (Alternria Late blight) on pistachio, Alternaria tenuissima (Alternria Late blight) on pistachio, Botrytis cinerea (grey mold) on citrus, Botrytis cinerea (grey mold) on kiwi, Botrytis cinerea (grey mold) on strawberry, Colletotrichum gloeosporioides (anthracnose) on strawberry, Sphaerotheca aphanis var. aphanis (powdery mildew) on strawberry, Fusicladium carpophilum (leaf spot) on almond, Mycosphaerella fijiensis (black sigatoka) on banana, Stemphylium vesicarium (brown spot) on pears, Colletotrichum graminicola (leaf Spot) on grass, and Pyricularia grisea (gray leafspot) on grass; and Monilinia laxa (brown rot) on fruits (including, but not limited to as apple, citrus, kiwi, strawberry, watermelon, banana and pears); Monilinia fructigena (brown rot) on fruits (including, but not limited to as apple, citrus, kiwi, strawberry, watermelon, banana and pears); and Monilinia fijiensis (brown rot) on fruits (including, but not limited to as apple, citrus, kiwi, strawberry, watermelon, banana and pears).

The resistant fungi in the course of the use of the present invention, wherein the mutation is F129L is Rhizoctonia solani (sheat blight) on rice and Alternaria solani (leaf spot) on potato.

Thus, the present invention relates to the use of mixtures according to the invention for combating resistant fungi on agricultural plants, wherein the plant is rice and the resistant fungi is Pyricularia oryzae.
Thus, the present invention relates to the use of mixtures according to the invention for combating resistant fungi on agricultural plants, wherein the plant is rice and the resistant fungi is Rhizoctonia solani.

Thus, the present invention relates to the use of mixtures according to the invention for combating resistant fungi on agricultural plants, wherein the plant is maize and the resistant fungi is Ustilago maydis.
Thus, the present invention relates to the use of mixtures according to the invention for combating resistant fungi on agricultural plants, wherein the plant is chickpea and the resistant fungi is Ascochyta rabiei.
Thus, the present invention relates to the use of mixtures according to the invention for combating resistant fungi on agricultural plants, wherein the plant is chickpea and the resistant fungi is Didymella rabiei.
Thus, the present invention relates to the use of mixtures according to the invention for combating resistant fungi on agricultural plants, wherein the plant is sugar beets and the resistant fungi is Cercospora beticola.
Thus, the present invention relates to the use of mixtures according to the invention for combating resistant fungi on agricultural plants, wherein the plant is cucumber and the resistant fungi is Corynespora cassiicola.
Thus, the present invention relates to the use of mixtures according to the invention for combating resistant fungi on agricultural plants, wherein the plant is cucurbits and the resistant fungi is Didymella bryoniae.
Thus, the present invention relates to the use of mixtures according to the invention for combating resistant fungi on agricultural plants, wherein the plant is watermelon and the resistant fungi is Didymella bryoniae.
Thus, the present invention relates to the use of mixtures according to the invention for combating resistant fungi on agricultural plants, wherein the plant is cucumber and the resistant fungi is Podosphera fusca.
Thus, the present invention relates to the use of mixtures according to the invention for combating resistant fungi on agricultural plants, wherein the plant is cucurbits and the resistant fungi is Podosphera xanthii.
Thus, the present invention relates to the use of mixtures according to the invention for combating resistant fungi on agricultural plants, wherein the plant is cucurbits and the resistant fungi is Pseudoperenospora cubensis.
Thus, the present invention relates to the use of mixtures according to the invention for combating resistant fungi on agricultural plants, wherein the plant is cucumber and the resistant fungi is Sphaerotheca fuliginea.
Thus, the present invention relates to the use of mixtures according to the invention for combating resistant fungi on agricultural plants, wherein the plant is potato and the resistant fungi is Alternaria solani.
Thus, the present invention relates to the use of mixtures according to the invention for combating resistant fungi on agricultural plants, wherein the plant is potato and the resistant fungi is Alternaria alternata.
Thus, the present invention relates to the use of mixtures according to the invention for combating resistant fungi on agricultural plants, wherein the plant is eggplant and the resistant fungi is Mycovellosiealla nattrassii.

Thus, the present invention relates to the use of mixtures according to the invention for combating resistant fungi on agricultural plants, wherein the plant is asparagus and the resistant fungi is Stemphylium vesicarium.
Thus, the present invention relates to the use of mixtures according to the invention for combating resistant fungi on agricultural plants, wherein the plant is apple and the resistant fungi is Alternaria alternata.
Thus, the present invention relates to the use of mixtures according to the invention for combating resistant fungi on agricultural plants, wherein the plant is apple and the resistant fungi is Alternaria malus.
Thus, the present invention relates to the use of mixtures according to the invention for combating resistant fungi on agricultural plants, wherein the plant is citrus and the resistant fungi is Alternaria alternata.
Thus, the present invention relates to the use of mixtures according to the invention for combating resistant fungi on agricultural plants, wherein the plant is pistachio and the resistant fungi is Alternaria arborescens.
Thus, the present invention relates to the use of mixtures according to the invention for combating resistant fungi on agricultural plants, wherein the plant is pistachio and the resistant fungi is Alternaria alternata.
Thus, the present invention relates to the use of mixtures according to the invention for combating resistant fungi on agricultural plants, wherein the plant is pistachio and the resistant fungi is Alternaria tenuissima.
Thus, the present invention relates to the use of mixtures according to the invention for combating resistant fungi on agricultural plants, wherein the plant is citrus and the resistant fungi is Botrytis cinerea.
Thus, the present invention relates to the use of mixtures according to the invention for combating resistant fungi on agricultural plants, wherein the plant is kiwi and the resistant fungi is Botrytis cinerea.
Thus, the present invention relates to the use of mixtures according to the invention for combating resistant fungi on agricultural plants, wherein the plant is strawberry and the resistant fungi is Botrytis cinerea.
Thus, the present invention relates to the use of mixtures according to the invention for combating resistant fungi on agricultural plants, wherein the plant is strawberry and the resistant fungi is Colletotrichum gloeosporioides.
Thus, the present invention relates to the use of mixtures according to the invention for combating resistant fungi on agricultural plants, wherein the plant is strawberry and the resistant fungi is Sphaerotheca aphanis var. aphanis.
Thus, the present invention relates to the use of mixtures according to the invention for combating resistant fungi on agricultural plants, wherein the plant is almond and the resistant fungi is Fusicladium carpophilum.
Thus, the present invention relates to the use of mixtures according to the invention for combating resistant fungi on agricultural plants, wherein the plant is banana and the resistant fungi is Mycosphaerella fijiensis.

Thus, the present invention relates to the use of mixtures according to the invention for combating resistant fungi on agricultural plants, wherein the plant is pears and the resistant fungi is Stemphylium vesicarium.
Thus, the present invention relates to the use of mixtures according to the invention for combating resistant fungi on agricultural plants, wherein the plant is grass and the resistant fungi is Colletotrichum graminicola.
Thus, the present invention relates to the use of mixtures according to the invention for combating resistant fungi on agricultural plants, wherein the plant is grass and the resistant fungi is Pyricularia grisea.
Thus, the present invention relates to the use of mixtures according to the invention for combating resistant fungi on agricultural plants, wherein the plant is fruits and the resistant fungi is Monilinia laxa.
Thus, the present invention relates to the use of mixtures according to the invention for combating resistant fungi on agricultural plants, wherein the plant is fruits and the resistant fungi is Monilinia fructigena.
Thus, the present invention relates to the use of mixtures according to the invention for combating resistant fungi on agricultural plants, wherein the plant is fruits and the resistant fungi is Monilinia fijiensis.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

As said above, the present invention comprises a method for improving the health of plants, wherein the plant, the locus where the plant is growing or is expected to grow or plant propagation material, from which the plant grows, is treated with a plant health effective amount of an inventive mixture.

The term "plant effective amount" denotes an amount of the inventive mixtures, which is sufficient for achieving plant health effects as defined herein below. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

The inventive mixtures are employed by treating the fungi or the plants, plant propagation materials (preferably seeds), materials or soil to be protected from fungal attack with a pesticidally effective amount of the active compounds. The application can be carried out both before and after the infection of the materials, plants or plant propagation materials (preferably seeds) by the pests.

In the context of the present invention, the term plant refers to an entire plant, a part of the plant or the propagation material of the plant.

The inventive mixtures and compositions thereof are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grape-fruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (Table Grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, the inventive mixtures and compositions thereof, respectively are used for controlling a multitude of fungi on field crops, such as potatoes, sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

Preferably, treatment of plant propagation materials with the inventive mixtures and compositions thereof, respectively, is used for controlling a multitude of fungi on cereals, such as wheat, rye, barley and oats; potatoes, tomatoes, vines, rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibitors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest ManageM.A. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield^{®} summer rape (Canola, BASF SE, Germany) being tolerant to imidazolinones, e. g. imazamox, or ExpressSun^{®} sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady^{®} (glyphosate-tolerant, Monsanto, U.S.A.), Cultivance^{®} (imidazolinone tolerant, BASF SE, Germany) and LibertyLink^{®} (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of arthropods, especially to beetles (Coelop-tera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard^{®} (corn cultivars producing the Cry1Ab toxin), YieldGard^{®} Plus (corn cultivars producing Cry1Ab and Cry3Bb1 toxins), Starlink^{®} (corn cultivars producing the Cry9c toxin), Herculex^{®} RW (corn cultivars producing Cry34Ab1, Cry35Ab1 and the enzyme Phosphinothricin-N-Acetyltransferase [PAT]); NuCOTN^{®} 33B (cotton cultivars producing the Cry1Ac toxin), Bollgard^{®} I (cotton cultivars producing the Cry1Ac toxin), Bollgard^{®} II (cotton cultivars producing Cry1Ac and Cry2Ab2 toxins); VIPCOT^{®} (cotton cultivars producing a VIP-toxin); NewLeaf^{®} (potato cultivars producing the Cry3A toxin); Bt-Xtra^{®}, NatureGard^{®}, KnockOut^{®}, BiteGard^{®}, Protecta^{®}, Bt11 (e. g. Agrisure^{®} CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the Mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera^{®} rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora^{®} potato, BASF SE, Germany).

The separate or joint application of the compounds of the inventive mixtures is carried out by spraying or dusting the seeds, the seedlings, the plants or the soils before or after sowing of the plants or before or after emergence of the plants.

The inventive mixtures and the compositions comprising them can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

Customary application rates in the protection of materials are, for example, from 0.01 g to 1000 g of active compound per m² treated material, desirably from 0.1 g to 50 g per m².

For use in spray compositions, the content of the mixture of the active ingredients is from 0.001 to 80 weight %, preferably from 0.01 to 50 weight % and most preferably from 0.01 to 15 weight %.

The present invention offers the following advantages:
It provides pesticidal mixtures which solve the problems of reducing the dosage rate and / or excellent spectrum of activity and / or combining knock-down activity with prolonged control and / or to resistance management and/or promoting the health of plants.

## Claims

1. Fungicidal mixtures comprising, as active components,
1) 1-[2-[[1-(4-chlorophenyl)pyrazol-3-yl]oxymethyl]-3-methyl-phenyl]-4-methyl-tetrazol-5-one as compound I and
2) a fungicidal compound II selected from compound II-1 and II-2, compound II-1 being [(1S,2S)-1-methyl-2-(o-tolyl)propyl] (2S)-2-[(4-methoxy-3-propanoyloxy-pyridine-2-carbonyl)amino]propanoate, and compound II-2 being N-methoxy-N-[[4-[5-(trifluoromethyl)-1,2,4-oxadiazol-3-yl]phenyl]methyl]cyclopropanecarboxamide.

2. A mixture as claimed in any of claim 1, wherein compound II is compound II-1.

3. A mixture as claimed in any of claim 1, wherein compound II is compound II-2.

4. A mixture as claimed in any of claim 1 to 3, wherein the ratio by weight of compound I and compound II is from 500:1 to 1:500.

5. A mixture as claimed in any of claim 1 to 4, further comprising a fungicidal compound III selected from Mefentrifluconazol, Fluxapyroxad, Pyraclostrobin, copper oxychloride, Mancozeb, Chlorothalonil, Prothioconazole, Difenoconazole, Pydiflumetofen, Benzovindiflupy, Impyrfluxam, Fluindapyr, Epoxiconazole, Tebuconazole, Metconazole, Fenpropimorph, Fenpropidin and Fluoxytioconazole.

6. A pesticidal composition, comprising a liquid or solid carrier and a mixture as defined in any of claims 1 to 5.

7. A method for controlling phytopathogenic pests, wherein the pest, their habitat, breeding grounds, their locus or the plants to be protected against pest attack, the soil or plant propagation material are treated with an effective amount of a mixture or composition as defined in any of claims 1 to 6.

8. The method according to of claim 7 for controlling phytopathogenic harmful fungi on soybean.

9. The method according to any of claims 7 to 8 for controlling Phakopsora pachyrhizi, P. meibomiae (soybean rust), Cercospora sojina, Cercospora kikuchii, Corynospera cassiicula, Colletotrichum truncatum, Sclerotinia sclerotiorum, Microsphaera diffusa, Septoria glycine, Peronospora manshurica or Diaporthe caulivora (D. phaseolorum var. Caulivora), in each case on soybean.

10. The method according to any of claims 7 to 9 for controlling *Phakopsora pachyrhizi* and *P. meibomiae* (soybean rust).

11. The method according to any of claims 7 to 9 for controlling *Cercospora sojina, C. Cercospora kikuchii or Corynospera cassiicula* on soybean.

12. A method for improving the health of plants, wherein the plant, the locus where the plant is growing or is expected to grow or plant propagation material from which the plant grows are treated with an effective amount of a mixture or composition as defined in any of claims 1 to 6.

13. A method for protection of plant propagation material from pests comprising contacting the plant propagation materials with a mixture or composition as defined in any of claims 1 to 6 in pesticidally effective amounts.

14. A method as claimed in any of claims 7 to 13, wherein the mixture as defined in any of claims 1 to 5 are applied simultaneously, that is jointly or separately, or in succession.

15. Plant propagation material, comprising the mixture as defined in any of claims 1 to 5 in an amount of from 0.01 g to 10 kg per 100 kg of plant propagation materials.
